(19) 

**Europäisches Patentamt**
**European Patent Office**
**Office européen des brevets**

(11) **EP 4 718 759 A1**

(12) **EUROPEAN PATENT APPLICATION**
published in accordance with Art. 153(4) EPC

(43) Date of publication:
**01.04.2026 Bulletin 2026/14**

(21) Application number: **23941858.5**

(22) Date of filing: **19.06.2023**

(51) International Patent Classification (IPC):
***H04L 1/16*** *(2023.01)*

(52) Cooperative Patent Classification (CPC):
**H04L 1/16**

(86) International application number:
**PCT/CN2023/100957**

(87) International publication number:
**WO 2024/259549 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHANG, Gongzheng
  Shenzhen, Guangdong 518129 (CN)**
• **LI, Rong
  Shenzhen, Guangdong 518129 (CN)**
• **XU, Chen
  Shenzhen, Guangdong 518129 (CN)**
• **WANG, Jian
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SEMANTIC COMMUNICATION METHOD AND RELATED APPARATUS**

(57) Embodiments of this application provide a semantic communication method and a related apparatus, to reduce unnecessary data retransmission and improve semantic communication efficiency. The semantic communication method provided in this application includes: sending first semantic data, where the first semantic data is determined from first data; and receiving first indication information, where the first indication information includes first information, and the first information indicates not to retransmit the first semantic data; the first indication information includes second information, and the second information is used to request semantic data other than the first semantic data in semantic data determined from the first data; or the first indication information includes third information, and the third information indicates to retransmit the first semantic data.

FIG. 6

**Description**

## TECHNICAL FIELD

This application relates to the field of communication technologies, and in particular, to a semantic communication method and a related apparatus.

## BACKGROUND

In the face of continuously growing data, higher-level communication needs to be considered, that is, effective communication between a transmit end and a receive end instead of precise data replication needs to be implemented. Semantic communication is a new communication mode, and an objective of semantic communication is to correctly interpret, by the receive end, semantic information sent by the transmit end, instead of precisely reconstructing sent data. This helps reduce transmission overheads.

In a conventional data transmission mechanism, data from an application layer of a transmit end apparatus is first processed by using protocols at various layers, and then sent after operations such as coding and modulation are performed at a physical layer. In a radio access network, a radio link control (radio link control, RLC) layer and the physical layer are involved in data retransmission. Specifically, data from the RLC layer is sent through the physical layer, and the transmit end apparatus adds a cyclic redundancy check (cyclic redundancy check, CRC) bit to a data packet. The CRC bit is used for data check. A receive end apparatus first decodes received data, and then performs CRC check on the data. If the check succeeds, the data is transmitted upward to the RLC layer. If the check fails, a negative acknowledgement (negative acknowledgement, NACK) is fed back to the transmit end apparatus. If the RLC layer of the receive end apparatus does not receive, within a specified time, data transmitted upward from the physical layer, it is considered that transmission of the data fails. The receive end apparatus may feed back a NACK to the transmit end apparatus, to trigger the transmit end apparatus to resend the data.

Therefore, it may be learned that CRC check and data retransmission are intended to ensure that the receive end apparatus perfectly reconstructs data sent by the transmit end device. For semantic communication, the receive end apparatus only needs to correctly interpret semantic information sent by the transmit end apparatus. The semantic information does not necessarily require perfect data reconstruction. Therefore, in the conventional data transmission mechanism, fault tolerance of semantic communication cannot be fully used as data retransmission is performed when CRC check fails, resulting in unnecessary data retransmission.

## SUMMARY

This application provides a semantic communication method and a related apparatus, to reduce unnecessary data retransmission and improve semantic communication efficiency.

According to a first aspect of this application, a semantic communication method is provided. The semantic communication method may be performed by a first apparatus. The first apparatus may be a terminal device or a network device, a component (for example, a processor, a chip, a chip system, or the like) in a terminal device or a network device, a logical module or software that can implement all or some of functions of a terminal device, or a logical module or software that can implement all or some of functions of a network device. The semantic communication method includes: The first apparatus sends first semantic data, where the first semantic data is determined from first data; and the first apparatus receives first indication information, where the first indication information includes first information, and the first information indicates not to retransmit the first semantic data; the first indication information includes second information, and the second information is used to request semantic data other than the first semantic data in semantic data determined from the first data; or the first indication information includes third information, and the third information indicates to retransmit the first semantic data.

It may be learned from the foregoing technical solution that after the first apparatus sends the first semantic data, the first apparatus receives the first indication information. The first indication information includes the first information, and the first information indicates not to retransmit the first semantic data. Alternatively, the first indication information includes the second information, and the second information is used to request semantic data other than the first semantic data in the semantic data determined from the first data. Alternatively, the first indication information includes the third information, and the third information indicates to retransmit the first semantic data. Therefore, it may be learned that the first indication information corresponds to three possible indication meanings. For example, when semantic check on the first semantic data succeeds, the first semantic data is not retransmitted. When semantic check on the first semantic data fails, and data check on the first semantic data succeeds, semantic data other than the first semantic data in the semantic data determined from the first data is requested. When semantic check on the first semantic data fails, and data check on the first semantic data fails, the first semantic data is retransmitted. Therefore, it may be learned that when the semantic check on the first semantic data succeeds, the semantic data does not need to be retransmitted. The corresponding semantic data is retransmitted only when the semantic check on the first semantic data fails. In this way, unnecessary data retransmission is reduced, a quantity of retransmissions is reduced, and semantic communication efficiency is improved.

Based on the first aspect, in a possible implementation, the first data includes raw data; the first data includes semantic data extracted from raw data; the first data includes semantic data that is extracted from raw data and that is obtained through semantic filtering; or the first data includes semantic data obtained from another apparatus. In this implementation, some possible implementations of the first data are shown, thereby enriching implementation of the solution.

Based on the first aspect, in a possible implementation, the method further includes: The first apparatus generates first semantic check data, where the first semantic check data is used to perform semantic check on the first semantic data; and the first apparatus sends the first semantic check data. In this implementation, the first apparatus may further send the first semantic check data, so that a receive end apparatus performs semantic check on the first semantic data by using the first semantic check data.

Based on the first aspect, in a possible implementation, the first semantic data includes data of one or more first semantic layers, and the data of the one or more first semantic layers is data of the one or more first semantic layers that is output by a first model when the first data is used as input data of the first model. Therefore, it may be learned that the first semantic data may be the data of the one or more first semantic layers that is output by the first model, so that the receive end apparatus executes a corresponding task by using the first semantic data.

Based on the first aspect, in a possible implementation, the first semantic check data includes data of one or more second semantic layers; the first semantic check data includes label information of data of one or more second semantic layers; or the first semantic check data includes data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model. Some possible implementations of the first semantic check data are provided in this implementation. The first semantic check data may be data of a higher semantic layer that is output by the first model; or the first semantic check data may be the data of the one or more third semantic layers that is output by the second model. Therefore, it is convenient for the receive end apparatus to perform semantic check on the first semantic data by using the first semantic check data.

Based on the first aspect, in a possible implementation, the method further includes: The first apparatus generates first data check data, where the first data check data is used to perform data check on the first semantic data; and the first apparatus sends the first data check data. Therefore, it is convenient for the receive end apparatus to perform data check on the first semantic data by using the first data check data.

Based on the first aspect, in a possible implementation, the first semantic data includes a plurality of groups of semantic data, the first data check data includes a plurality of groups of data check data, the plurality of groups of semantic data and the plurality of groups of data check data are in a one-to-one correspondence, and each of the plurality of groups of data check data is used to perform data check on one group of semantic data corresponding to the group data check data. Therefore, when data check on only one group or several groups of semantic data fails, only the group or several groups of semantic data need to be retransmitted. The plurality of groups of semantic data do not need to be retransmitted, to further reduce a data retransmission amount.

Based on the first aspect, in a possible implementation, each of the plurality of groups of semantic data includes data of one output channel in a convolutional neural network, and different groups of semantic data correspond to data of different output channels; or each of the plurality of groups of semantic data includes output data corresponding to one token in a transformer, and different groups of semantic data correspond to output data corresponding to different tokens. Therefore, two grouping manners of grouping the first semantic data into a plurality of groups of semantic data are provided, thereby facilitating implementation of the solution.

Based on the first aspect, in a possible implementation, the second information further includes a semantic check result obtained by performing semantic check on the first semantic data. Therefore, the first apparatus is indirectly indicated, by using the semantic check result, to retransmit a corresponding quantity of pieces of new semantic data, so that the receive end apparatus executes a corresponding task. For example, the first apparatus is a network device, and the receive end apparatus is a terminal device. The terminal device feeds back the second information to the network device.

Based on the first aspect, in a possible implementation, the second information further includes second indication information, the second indication information indicates to retransmit N pieces of semantic data other than the first semantic data in the semantic data determined from the first data, and N is an integer greater than or equal to 1. Therefore, the first apparatus is indicated to retransmit the N pieces of new semantic data. For example, the first apparatus is a terminal device, and the receive end apparatus is a network device. The network device indicates the terminal device to retransmit the N pieces of new semantic data.

Based on the first aspect, in a possible implementation, the semantic check result includes a correctness probability of the first semantic data; or the semantic check result includes a similarity value between the first semantic check data and second semantic check data, the first semantic check data is semantic check data received by an apparatus that sends the second information, and the second semantic check data is generated based on the first semantic data received by the apparatus that sends the second information. Therefore, two possible implementations of the semantic check result are provided. This indicates reliability of the semantic check result. Therefore, the first apparatus is indicated to retransmit a corresponding quantity of pieces of new semantic data.

Based on the first aspect, in a possible implementation, the second information includes at least 3 bits, first 2 bits in the at least 3 bits indicate that the semantic check on the first semantic data received by the apparatus that sends the second information fails, a bit other than the first 2 bits in the at least 3 bits indicates a level of the semantic check result obtained through the semantic check, and the level of the semantic check result represents the correctness probability of the first semantic data received by the apparatus that sends the second information. This indicates reliability of the semantic check result. Therefore, the first apparatus is indicated to retransmit a corresponding quantity of pieces of new semantic data.

Based on the first aspect, in a possible implementation, if the first indication information includes the second information, the method further includes: The first apparatus sends second semantic data, where the second semantic data is semantic data, other than the first semantic data, determined from the first data; or the second semantic data includes data of a fourth semantic layer, the first semantic data includes the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer. In this implementation, the first apparatus may retransmit new semantic data. For example, the first apparatus may retransmit data of a lower semantic layer that is output by the first model, so that the receive end apparatus executes a corresponding task by using the new semantic data.

Based on the first aspect, in a possible implementation, if the first indication information includes the third information, the method further includes: The first apparatus retransmits the first semantic data. Therefore, the receive end apparatus executes a corresponding task.

According to a second aspect of this application, a semantic communication method is provided. The semantic communication method may be performed by a second apparatus. The second apparatus may be a terminal device or a network device, a component (for example, a processor, a chip, a chip system, or the like) in a terminal device or a network device, a logical module or software that can implement all or some of functions of a terminal device, or a logical module or software that can implement all or some of functions of a network device. The semantic communication method includes: The second apparatus receives first semantic data, where the first semantic data is determined from first data; the second apparatus performs semantic check on the first semantic data; and the second apparatus sends first indication information, where when the semantic check on the first semantic data succeeds, the first indication information includes first information, and the first information indicates not to retransmit the first semantic data; or when the semantic check on the first semantic data fails, the second apparatus performs data check on the first semantic data, where when the data check on the first semantic data succeeds, the first indication information includes second information, and the second information is used to request semantic data other than the first semantic data in semantic data determined from the first data; or when the semantic check on the first semantic data fails, the second apparatus performs data check on the first semantic data, where when the data check on the first semantic data fails, the first indication information includes third information, and the third information indicates to retransmit the first semantic data.

In the foregoing technical solution, when the data check on the first semantic data succeeds, the first indication information includes the second information, and the second information is used to request semantic data other than the first semantic data in the semantic data determined from the first data. Therefore, it may be learned that when the semantic check on the first semantic data succeeds, the semantic data does not need to be retransmitted. When the semantic check on the first semantic data fails, and the data check on the first semantic data succeeds, the first indication information includes the second information, and the second information is used to request semantic data other than the first semantic data in the semantic data determined from the first data. Alternatively, when the semantic check on the first semantic data fails, and the data check on the first semantic data fails, the second apparatus performs data check on the first semantic data. When the data check on the first semantic data fails, the first indication information includes the third information, and the third information indicates to retransmit the first semantic data. The corresponding semantic data is retransmitted only when the semantic check on the first semantic data fails. In this way, unnecessary data retransmission is reduced, a quantity of retransmissions is reduced, and semantic communication efficiency is improved.

Based on the second aspect, in a possible implementation, the first data includes raw data; the first data includes semantic data extracted from raw data; the first data includes semantic data that is extracted from raw data and that is obtained through semantic filtering; or the first data includes semantic data obtained from another apparatus. In this implementation, some possible implementations of the first data are shown, thereby enriching implementation of the solution.

Based on the second aspect, in a possible implementation, the method further includes: The second apparatus receives first semantic check data; and that the second apparatus performs semantic check on the first semantic data includes: The second apparatus generates second semantic check data based on the first semantic data; the second apparatus determines whether the first semantic check data is consistent with the second semantic check data; and if the first semantic check data is consistent with the second semantic check data, the second apparatus determines that the semantic check on the first semantic data succeeds; or if the first semantic check data is inconsistent with the second semantic check data, the second apparatus determines that the semantic check on the first semantic data fails. In this implementation, the second apparatus may obtain the first semantic check data. The second apparatus may perform semantic check on the first semantic data by using the first semantic check data. Therefore, semantic check is performed on the first semantic data.

Based on the second aspect, in a possible implementation, the first semantic data includes data of one or more first semantic layers, and the data of the one or more first semantic layers is data of the one or more first semantic layers that is output by a first model when the first data is used as input data of the first model. Therefore, it may be learned that the first semantic data may be the data of the one or more first semantic layers that is output by the first model, so that the second apparatus executes a corresponding task by using the first semantic data.

Based on the second aspect, in a possible implementation, the first semantic check data includes data of one or more second semantic layers; the first semantic check data includes label information of data of one or more second semantic layers; or the first semantic check data includes data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model. Some possible implementations of the first semantic check data are provided in this implementation. The first semantic check data may be data of a higher semantic layer that is output by the first model; or the first semantic check data may be the data of the one or more third semantic layers that is output by the second model. Therefore, it is convenient for the second apparatus to perform semantic check on the first semantic data by using the first semantic check data.

Based on the second aspect, in a possible implementation, that the second apparatus performs semantic check on the first semantic data includes: The second apparatus determines a correctness probability of the first semantic data; and if the correctness probability is greater than a preset threshold, the second apparatus determines that the semantic check on the first semantic data succeeds; or if the correctness probability is less than or equal to a preset threshold, the second apparatus determines that the semantic check on the first semantic data fails. Therefore, semantic check is performed on the first semantic data. Another semantic check manner is provided, to enrich implementation of the solution.

Based on the second aspect, in a possible implementation, the method further includes: The second apparatus receives first data check data; and that the second apparatus performs data check on the first semantic data includes: The second apparatus performs data check on the first semantic data based on the first data check data. Data check is implemented on the first semantic data.

Based on the second aspect, in a possible implementation, the second information further includes a semantic check result obtained by performing semantic check on the first semantic data. Therefore, a transmit end apparatus is indirectly indicated, by using the semantic check result, to retransmit a corresponding quantity of pieces of new semantic data, so that the second apparatus executes a corresponding task. For example, the transmit end apparatus is a network device, and the second apparatus is a terminal device. The terminal device feeds back the second information to the network device.

Based on the second aspect, in a possible implementation, the second information includes second indication information, the second indication information indicates to send and retransmit N pieces of semantic data other than the first semantic data in the semantic data determined from the first data, and N is an integer greater than or equal to 1. Therefore, the transmit end apparatus is indicated to retransmit the N pieces of new semantic data. For example, the transmit end apparatus is a terminal device, and the second apparatus is a network device. The network device indicates the terminal device to retransmit the N pieces of new semantic data.

Based on the second aspect, in a possible implementation, the semantic check result includes the correctness probability of the first semantic data; or the semantic check result includes a similarity value between the first semantic check data and the second semantic check data, the first semantic check data is semantic check data received by the second apparatus, and the second semantic check information is generated based on the first semantic data. Therefore, two possible implementations of the semantic check result are provided. This indicates reliability of the semantic check result. Therefore, the transmit end apparatus is indicated to retransmit a corresponding quantity of pieces of new semantic data.

Based on the second aspect, in a possible implementation, the first semantic data includes a plurality of groups of semantic data, the first data check data includes a plurality of groups of data check data, and the plurality of groups of semantic data and the plurality of groups of data check data are in a one-to-one correspondence; and that the second apparatus performs data check on the first semantic data based on the first data check data includes: The second apparatus performs data check on each of the plurality of groups of semantic data by using one group of data check data corresponding to each group of semantic data, where when data check on a first part of the plurality of groups of semantic data succeeds, and data check on a second part of the plurality of groups of semantic data fails, the third information indicates to retransmit the second part of the groups of semantic data. The plurality of groups of semantic data do not need to be retransmitted, to further reduce a data retransmission amount.

Based on the second aspect, in a possible implementation, each of the plurality of groups of semantic data includes data of one output channel in a convolutional neural network, and different groups of semantic data correspond to data of different output channels; or each of the plurality of groups of semantic data includes output data corresponding to one token in a transformer, and different groups of semantic data correspond to output data corresponding to different tokens. Therefore, two grouping manners of grouping the first semantic data into a plurality of groups of semantic data are provided, thereby facilitating implementation of the solution.

Based on the second aspect, in a possible implementation, the second information includes at least 3 bits, first 2 bits in the at least 3 bits indicate that the semantic check on the first semantic data fails, a bit other than the first 2 bits in the at least 3 bits indicates a level of the semantic check result obtained through the semantic check, and the level of the semantic check result represents the correctness probability of the first semantic data. This indicates reliability of the semantic check result. Therefore, the transmit end apparatus is indicated to retransmit a corresponding quantity of pieces of new semantic data.

Based on the second aspect, in a possible implementation, if the first indication information includes the second information, the method further includes: The second apparatus receives second semantic data, where the second semantic data is semantic data, other than the first semantic data, determined from the first data; or the second semantic data includes data of a fourth semantic layer, the first semantic data includes the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer. In this implementation, the second apparatus receives retransmitted new semantic data. For example, the second semantic data includes data of a lower semantic layer that is output by the first model, so that the second apparatus executes a corresponding task by using the new semantic data.

Based on the second aspect, in a possible implementation, if the first indication information includes the third information, the method further includes: The second apparatus receives the retransmitted first semantic data. Therefore, the second apparatus executes a corresponding task.

According to a third aspect of this application, a first apparatus is provided and includes:
a transceiver module, configured to: send first semantic data, where the first semantic data is determined from first data; and receive first indication information, where the first indication information includes first information, and the first information indicates not to retransmit the first semantic data; the first indication information includes second information, and the second information is used to request semantic data other than the first semantic data in semantic data determined from the first data; or the first indication information includes third information, and the third information indicates to retransmit the first semantic data.

Based on the third aspect, in a possible implementation, the first data includes raw data; the first data includes semantic data extracted from raw data; the first data includes semantic data that is extracted from raw data and that is obtained through semantic filtering; or the first data includes semantic data obtained from another apparatus.

Based on the third aspect, in a possible implementation, the first apparatus further includes a processing module; the processing module is configured to generate first semantic check data, where the first semantic check data is used to perform semantic check on the first semantic data; and the transceiver module is further configured to send the first semantic check data.

Based on the third aspect, in a possible implementation, the first semantic data includes data of one or more first semantic layers, and the data of the one or more first semantic layers is data of the one or more first semantic layers that is output by a first model when the first data is used as input data of the first model.

Based on the third aspect, in a possible implementation, the first semantic check data includes data of one or more second semantic layers; the first semantic check data includes label information of data of one or more second semantic layers; or the first semantic check data includes data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model.

Based on the third aspect, in a possible implementation, the first apparatus further includes the processing module; the processing module is configured to generate first data check data, where the first data check data is used to perform data check on the first semantic data; and the transceiver module is further configured to send the first data check data.

Based on the third aspect, in a possible implementation, the first semantic data includes a plurality of groups of semantic data, the first data check data includes a plurality of groups of data check data, the plurality of groups of semantic data and the plurality of groups of data check data are in a one-to-one correspondence, and each of the plurality of groups of data check data is used to perform data check on one group of semantic data corresponding to the group of data check data.

Based on the third aspect, in a possible implementation, each of the plurality of groups of semantic data includes data of one output channel in a convolutional neural network, and different groups of semantic data correspond to data of different output channels; or each of the plurality of groups of semantic data includes output data corresponding to one token in a transformer, and different groups of semantic data correspond to output data corresponding to different tokens.

Based on the third aspect, in a possible implementation, the second information further includes a semantic check result obtained by performing semantic check on the first semantic data.

Based on the third aspect, in a possible implementation, the second information further includes second indication information, the second indication information indicates to retransmit N pieces of semantic data other than the first semantic data in the semantic data determined from the first data, and N is an integer greater than or equal to 1.

Based on the third aspect, in a possible implementation, the semantic check result includes a correctness probability of the first semantic data; or the semantic check result includes a similarity value between the first semantic check data and second semantic check data, the first semantic check data is semantic check data received by an apparatus that sends the second information, and the second semantic check data is generated based on the first semantic data received by the apparatus that sends the second information.

Based on the third aspect, in a possible implementation, the second information includes at least 3 bits, first 2 bits in the at least 3 bits indicate that the semantic check on the first semantic data received by the apparatus that sends the second information fails, a bit other than the first 2 bits in the at least 3 bits indicates a level of the semantic check result obtained through the semantic check, and the level of the semantic check result represents the correctness probability of the first semantic data received by the apparatus that sends the second information.

Based on the third aspect, in a possible implementation, if the first indication information includes the second information, the transceiver module is further configured to send second semantic data, where the second semantic data is semantic data, other than the first semantic data, determined from the first data; or the second semantic data includes data of a fourth semantic layer, the first semantic data includes the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer.

Based on the third aspect, in a possible implementation, if the first indication information includes the third information, the transceiver module is further configured to retransmit the first semantic data.

According to a fourth aspect of this application, a second apparatus is provided and includes:

a transceiver module, configured to receive first semantic data, where the first semantic data is determined from first data; and
a processing module, configured to perform semantic check on the first semantic data.

The transceiver module is further configured to send first indication information. When the semantic check on the first semantic data succeeds, the first indication information includes first information, and the first information indicates not to retransmit the first semantic data.

Alternatively, the processing module is further configured to: when the semantic check on the first semantic data fails, perform data check on the first semantic data, where when the data check on the first semantic data succeeds, the first indication information includes second information, and the second information is used to request semantic data other than the first semantic data in semantic data determined from the first data; or when the semantic check on the first semantic data fails, perform data check on the first semantic data, where when the data check on the first semantic data fails, the first indication information includes third information, and the third information indicates to retransmit the first semantic data.

Based on the fourth aspect, in a possible implementation, the first data includes raw data; the first data includes semantic data extracted from raw data; the first data includes semantic data that is extracted from raw data and that is obtained through semantic filtering; or the first data includes semantic data obtained from another apparatus.

Based on the fourth aspect, in a possible implementation, the transceiver module is further configured to:

receive first semantic check data; and
the processing module is specifically configured to: generate second semantic check data based on the first semantic data; determine whether the first semantic check data is consistent with the second semantic check data; and if the first semantic check data is consistent with the second semantic check data, determine that the semantic check on the semantic data succeeds; or if the first semantic check data is inconsistent with the second semantic check data, determine that the semantic check on the first semantic data fails.

Based on the fourth aspect, in a possible implementation, the first semantic data includes data of one or more first semantic layers, and the data of the one or more first semantic layers is data of the one or more first semantic layers that is output by a first model when the first data is used as input data of the first model.

Based on the fourth aspect, in a possible implementation, the first semantic check data includes data of one or more second semantic layers; the first semantic check data includes label information of data of one or more second semantic layers; or the first semantic check data includes data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model.

Based on the fourth aspect, in a possible implementation, the processing module is specifically configured to: determine a correctness probability of the first semantic data; and if the correctness probability is greater than a preset threshold, determine that the semantic check on the first semantic data succeeds; or if the correctness probability is less than or equal to a preset threshold, determine that the semantic check on the first semantic data fails.

Based on the fourth aspect, in a possible implementation, the transceiver module is further configured to:

receive first data check data; and
the processing module is further configured to perform data check on the first semantic data based on the first data check data.

Based on the fourth aspect, in a possible implementation, the second information further includes a semantic check result obtained by performing semantic check on the first semantic data.

Based on the fourth aspect, in a possible implementation, the second information includes second indication information, the second indication information indicates to send and retransmit N pieces of semantic data other than the first semantic data in the semantic data determined from the first data, and N is an integer greater than or equal to 1.

Based on the fourth aspect, in a possible implementation, the semantic check result includes the correctness probability of the first semantic data; or the semantic check result includes a similarity value between the first semantic check data and the second semantic check data, the first semantic check data is semantic check data received by the second apparatus, and the second semantic check information is generated based on the first semantic data.

Based on the fourth aspect, in a possible implementation, the first semantic data includes a plurality of groups of semantic data, the first data check data includes a plurality of groups of data check data, and the plurality of groups of semantic data and the plurality of groups of data check data are in a one-to-one correspondence; and
the processing module is specifically configured to perform data check on each of the plurality of groups of semantic data by using one group of data check data corresponding to each group of semantic data, where when data check on a first part of the plurality of groups of semantic data succeeds, and data check on a second part of the plurality of groups of semantic data fails, the third information indicates to retransmit the second part of the groups of semantic data.

Based on the fourth aspect, in a possible implementation, each of the plurality of groups of semantic data includes data of one output channel in a convolutional neural network, and different groups of semantic data correspond to data of different output channels; or each of the plurality of groups of semantic data includes output data corresponding to one token in a transformer, and different groups of semantic data correspond to output data corresponding to different tokens.

Based on the fourth aspect, in a possible implementation, the second information includes at least 3 bits, first 2 bits in the at least 3 bits indicate that the semantic check on the first semantic data fails, a bit other than the first 2 bits in the at least 3 bits indicates a level of the semantic check result obtained through the semantic check, and the level of the semantic check result represents the correctness probability of the first semantic data.

Based on the fourth aspect, in a possible implementation, if the first indication information includes the second information, the transceiver module is further configured to receive second semantic data, where the second semantic data is semantic data, other than the first semantic data, determined from the first data; or the second semantic data includes data of a fourth semantic layer, the first semantic data includes the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer.

Based on the fourth aspect, in a possible implementation, if the first indication information includes the third information, the transceiver module is further configured to receive the retransmitted first semantic data.

For the third aspect, the first apparatus may be a terminal device or a network device, a component (for example, a processor, a chip, a chip system, or the like) in a terminal device or a network device, a logical module or software that can implement all or some of functions of a terminal device, or a logical module or software that can implement all or some of functions of a network device. The transceiver module may be a transceiver or an input/output interface; and the processing module may be a processor.

In an implementation, the first apparatus is a chip, a chip system, or a circuit disposed in the terminal device.

When the first apparatus is a chip, a chip system, or a circuit disposed in the terminal device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

In another implementation, the first apparatus is a chip, a chip system, or a circuit disposed in the network device. When the first apparatus is a chip, a chip system, or a circuit disposed in the network device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

For the fourth aspect, the second apparatus may be a terminal device or a network device, a component (for example, a processor, a chip, a chip system, or the like) in a terminal device or a network device, a logical module or software that can implement all or some of functions of a terminal device, or a logical module or software that can implement all or some of functions of a network device. The transceiver module may be a transceiver or an input/output interface; and the processing module may be a processor.

In an implementation, the second apparatus is a chip, a chip system, or a circuit disposed in the terminal device. When the second apparatus is a chip, a chip system, or a circuit disposed in the terminal device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

In another implementation, the second apparatus is a chip, a chip system, or a circuit disposed in the network device. When the second apparatus is a chip, a chip system, or a circuit disposed in the network device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

According to a fifth aspect of this application, a first apparatus is provided. The first apparatus includes a processor and a memory. The memory stores a computer program or computer instructions, and the processor is configured to invoke and run the computer program or the computer instructions stored in the memory, to enable the processor to implement any implementation of the first aspect.

Optionally, the first apparatus further includes a transceiver, and the processor is configured to control the transceiver to receive/send a signal.

According to a sixth aspect of this application, a second apparatus is provided. The second apparatus includes a processor and a memory. The memory stores a computer program or computer instructions, and the processor is configured to invoke and run the computer program or the computer instructions stored in the memory, to enable the processor to implement any implementation of the second aspect.

Optionally, the second apparatus further includes a transceiver, and the processor is configured to control the transceiver to receive/send a signal.

According to a seventh aspect of this application, a first apparatus is provided and includes a processor and an interface circuit. The processor is configured to: communicate with another apparatus through the interface circuit, and perform the method in the first aspect. There are one or more processors.

According to an eighth aspect of this application, a second apparatus is provided and includes a processor and an interface circuit. The processor is configured to: communicate with another apparatus through the interface circuit, and perform the method in the second aspect. There are one or more processors.

According to a ninth aspect of this application, a first apparatus is provided and includes a processor, configured to: be connected to a memory, and invoke a program stored in the memory, to perform the method in the first aspect. The memory may be located inside the first apparatus, or may be located outside the first apparatus. In addition, there are one or more processors.

According to a tenth aspect of this application, a second apparatus is provided and includes a processor, configured to: be connected to a memory, and invoke a program stored in the memory, to perform the method in the second aspect. The memory may be located inside the second apparatus, or may be located outside the second apparatus. In addition, there are one or more processors.

In an implementation, the first apparatus in the third aspect, the fifth aspect, the seventh aspect, or the ninth aspect may be a chip or a chip system.

In an implementation, the second apparatus in the fourth aspect, the sixth aspect, the eighth aspect, or the tenth aspect may be a chip or a chip system.

According to an eleventh aspect of this application, a computer program product including computer instructions is provided. When the computer program product is run on a computer, the computer is enabled to perform any implementation of either the first aspect or the second aspect.

According to a twelfth aspect of this application, a computer-readable storage medium is provided and includes computer instructions. When the instructions are run on a computer, the computer is enabled to perform any implementation of either the first aspect or the second aspect.

According to a thirteenth aspect of this application, a chip apparatus is provided and includes a processor, configured to invoke a computer program or computer instructions in a memory, to enable the processor to perform any implementation of either the first aspect or the second aspect.

Optionally, the processor is coupled to the memory through an interface.

According to a fourteenth aspect of this application, a communication system is provided. The communication system includes the first apparatus shown in the third aspect and the second apparatus shown in the fourth aspect.

## BRIEF DESCRIPTION OF DRAWINGS

FIG. 1A is a diagram of a structure of a communication system according to an embodiment of this application;
FIG. 1B is another diagram of a structure of a communication system according to an embodiment of this application;
FIG. 1C is still another diagram of a structure of a communication system according to an embodiment of this application;
FIG. 2 is a diagram of a semantic layer according to an embodiment of this application;
FIG. 3 is a diagram of a structure of a convolutional neural network according to an embodiment of this application;
FIG. 4 is a diagram of a structure of a transformer neural network according to an embodiment of this application;
FIG. 5 shows a semantic communication system according to an embodiment of this application;
FIG. 6 is a diagram of an embodiment of a semantic communication method according to an embodiment of this application;
FIG. 7 is a schematic flowchart of a semantic communication method according to an embodiment of this application;
FIG. 8 is a diagram of an application scenario of a semantic communication method according to an embodiment of this application;
FIG. 9 is a diagram of data check according to an embodiment of this application;
FIG. 10 is another diagram of data check according to an embodiment of this application;
FIG. 11 is a diagram of another application scenario of a semantic communication method according to an embodiment of this application;
FIG. 12 is a diagram of a structure of a first apparatus according to an embodiment of this application;
FIG. 13 is a diagram of a structure of a second apparatus according to an embodiment of this application;
FIG. 14 is a diagram of a structure of an apparatus according to an embodiment of this application;
FIG. 15 is a diagram of a structure of a terminal device according to an embodiment of this application; and
FIG. 16 is a diagram of a structure of a network device according to an embodiment of this application.

## DESCRIPTION OF EMBODIMENTS

Embodiments of this application provide a semantic communication method and a related apparatus, to reduce unnecessary data retransmission and improve semantic communication efficiency.

The following clearly and completely describes the technical solutions in embodiments of this application with reference to the accompanying drawings in embodiments of this application. Clearly, the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application means that a specific feature, structure, or characteristic described with reference to the embodiment is included in one or more embodiments of this application. Therefore, statements such as "in an embodiment", "in some embodiments", "in some other embodiments", "in other embodiments", and the like that appear at different locations in this specification do not necessarily mean referring to a same embodiment, but mean "one or more but not all of embodiments", unless otherwise specifically emphasized in another manner. The terms "include", "comprise", "have", and variants thereof all mean "include but are not limited to", unless otherwise specifically emphasized in another manner.

In descriptions of this application, unless otherwise specified, "/" means "or". For example, A/B may represent A or B. The term "and/or" in this specification merely describes an association relationship between associated objects, and represents that three relationships may exist. For example, A and/or B may represent the following three cases: Only A exists, both A and B exist, and only B exists. In addition, "at least one" means one or more, and "a plurality of" means two or more. "At least one of the following items" or a similar expression thereof indicates any combination of these items, including a single item or any combination of a plurality of items. For example, at least one of a, b, or c may represent a, b, c, a and b, a and c, b and c, or a, b, and c, where a, b, or c may be singular or plural.

The technical solutions provided in this application may be applied to a wireless communication system such as a 5th generation (5th generation, 5G) mobile communication system, a new radio (new radio, NR) system, a satellite communication system, or a short-range communication system. The wireless communication system in embodiments of this application includes but is not limited to a narrowband internet of things (narrowband internet of things, NB-IoT) system, a long term evolution (long term evolution, LTE) system, and enhanced mobile broadband (enhanced mobile broadband, eMBB), ultra-reliable and low-latency communication (ultra-reliable and low-latency communication, URLLC), and massive machine type communication (massive machine type communication, mMTC) in three application scenarios of a 5G communication system, and with continuous development of communication technologies, further includes a subsequent evolved communication system such as a 6th generation (6th generation, 6G) mobile communication system, and the like.

The communication system to which the technical solutions provided in this application are applied includes a first apparatus and a second apparatus. The first apparatus and the second apparatus may perform the technical solutions in this application, to implement semantic communication. Optionally, the communication system may further include more apparatuses, for example, a third apparatus. The first apparatus, the second apparatus, and the third apparatus may perform the technical solutions in this application.

Optionally, the first apparatus is a network device or a terminal device; the first apparatus is a chip, a chip system, or a processor in a network device or a terminal device; the first apparatus is a logical module, software, or the like that implements some or all of functions of a network device; or the first apparatus is a logical module, software, or the like that implements some or all of functions of a terminal device.

Optionally, the second apparatus is a network device or a terminal device; the first apparatus is a chip, a chip system, or a processor in a network device or a terminal device; the first apparatus is a logical module, software, or the like that implements some or all of functions of a network device; or the second apparatus is a logical module, software, or the like that implements some or all of functions of a terminal device.

Optionally, the network device is a core network device or an access network device.

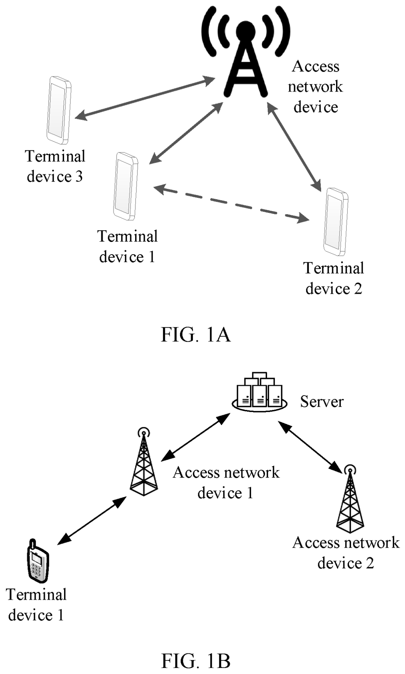

The following describes some possible application scenarios of this application with reference to FIG. 1A to FIG. 1C. This application is still applicable to another application scenario. This is not specifically limited in this application.

FIG. 1A is a diagram of a structure of a communication system according to an embodiment of this application. With reference to FIG. 1A, the communication system includes an access network device, a terminal device 1, a terminal device 2, and a terminal device 3. Optionally, in this application, the first apparatus may be the terminal device 1, and the second apparatus may be the terminal device 2. The terminal device 1 and the terminal device 2 may perform the technical solutions in this application.

A device quantity and form shown in FIG. 1A are used as an example, and do not constitute a limitation on this embodiment of this application. In actual application, the communication system in FIG. 1A may include more access network devices and more terminal devices.

FIG. 1B is another diagram of a structure of a communication system according to an embodiment of this application. With reference to FIG. 1B, the communication system includes a server, an access network device 1, an access network device 2, and a terminal device 1. Optionally, in this application, the first apparatus is the access network device 1, and the second apparatus is the terminal device 1; or the first apparatus is the terminal device 1, and the second apparatus is the access network device 1. The access network device 1 and the terminal device 1 may perform the technical solutions in this application.

A device quantity and form shown in FIG. 1B are used as an example, and do not constitute a limitation on this embodiment of this application. In actual application, the communication system in FIG. 1B may include more servers, more access network devices, and more terminal devices.

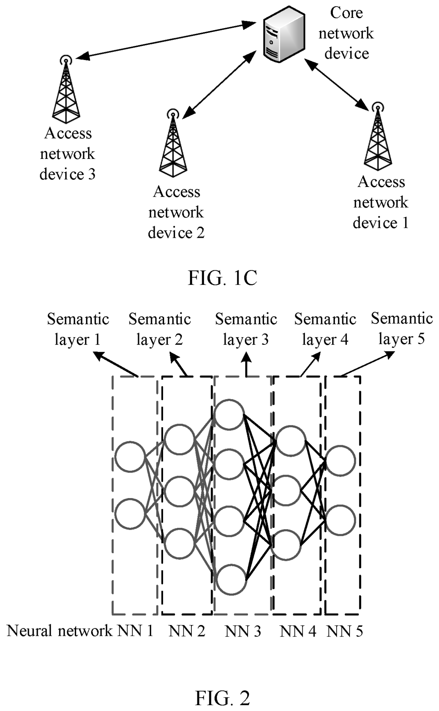

FIG. 1C is still another diagram of a structure of a communication system according to an embodiment of this application. With reference to FIG. 1C, the communication system includes a core network device, an access network device 1, an access network device 2, and an access network device 3. Optionally, in this application, the first apparatus is the core network device, and the second apparatus is the access network device 1; or the first apparatus is the access network device 1, and the second apparatus is the core network device. The core network device and the access network device 1 may perform the technical solutions in this application.

A device quantity and form shown in FIG. 1C are used as an example, and do not constitute a limitation on this embodiment of this application. In actual application, the communication system in FIG. 1C may include more core network devices and more access network devices.

The following describes the terminal device and the network device in this application.

The terminal device may be a wireless terminal device that can receive scheduling information and indication information from the network device. The wireless terminal device may be a device that provides voice and/or data connectivity to users, a handheld device with a wireless connection function, or another processing device connected to a wireless modem.

The terminal device may communicate with one or more core networks or the internet through an access network.

The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus that exchanges voice and/or data with a radio access network. For example, the terminal device is a device such as a personal communication service (personal communication service, PCS) phone, a cordless phone, a session initiation protocol phone, a wireless local loop (wireless local loop, WLL) station, a personal digital assistant (personal digital assistant, PDA), a tablet (Pad), or a computer with a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear by using a wearable technology, for example, glasses, gloves, watches, clothes, shoes, and the like. The wearable device is a portable device that is directly worn on a body or integrated into clothes or an accessory of a user. The wearable device is not merely a hardware device, but implements a powerful function through software support, data exchange, and cloud interaction. In a broad sense, the wearable intelligent device includes a full-featured and large-sized device that can implement all or some of functions without depending on a smartphone, for example, a smartwatch or smart glasses, and includes a device that provides only one type of application function and that needs to be used in combination with another device such as a smartphone, for example, various smart bands, various smart helmets, various pieces of smart jewelry, and the like for monitoring physical signs.

The terminal device may alternatively be an uncrewed aerial vehicle, a robot, a terminal device in device-to-device (device-to-device, D2D) communication, a terminal device in vehicle-to-everything (vehicle-to-everything, V2X), a virtual reality (virtual reality, VR) terminal device, an augmented reality (augmented reality, AR) terminal device, a wireless terminal device in industrial control (industrial control), a wireless terminal device in self-driving (self-driving), a wireless terminal device in remote medical (remote medical), a wireless terminal in a smart grid (smart grid), a wireless terminal device in transportation safety (transportation safety), a wireless terminal device in a smart city (smart city), a wireless terminal device in a smart home (smart home), or the like.

In addition, the terminal device may alternatively be a terminal device in an evolved communication system (for example, a 6th generation (6th generation, 6G) communication system or the like) after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, or an internet of things (internet of things, IoT) device.

In embodiments of this application, the terminal device has an artificial intelligence (artificial intelligence, AI) capability. For example, the terminal device may obtain an AI service provided by the network device or a server. The terminal device further has an AI processing capability.

It should be noted that the terminal device may be a device or an apparatus with a chip, a device or an apparatus integrated with a circuit, or a chip, a module, or a control unit in the device or the apparatus shown above. This is not specifically limited in this application.

The network device may be a device in a wireless network. For example, the network device may be an access network node (or an access network device) that connects the terminal device to the wireless network, and may also be referred to as a base station. Currently, some examples of the access network device are a base station (gNodeB, gNB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB or a home NodeB, HNB), a baseband unit (baseband unit, BBU), a wireless fidelity (wireless fidelity, Wi-Fi) access point AP, or the like. In addition, in a network structure, the network device may include a central unit (central unit, CU) node, a distributed unit (distributed unit, DU) node, a CU-control plane (control plane, CP), a CU-user plane (user plane, UP), a radio unit (radio unit, RU), or a RAN device including a CU node and a DU node. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). In different systems, the CU (or the CU-CP and the CU-UP), the DU, or the RU may have different names, but persons skilled in the art may understand meanings of the names. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). Any one of the CU (or the CU-CP or the CU-UP), the DU, and the RU may be implemented by using a software module, a hardware module, or a combination of a software module and a hardware module.

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), or a session management function (session management function, SMF) in a 5G network. In addition, the core network device may further include another core network device in the 5G network and a next generation network (for example, a 6G network) of the 5G network.

In embodiments of this application, the network device may alternatively be a network node having an AI capability, and may provide an AI service to the terminal device or another network device. For example, the network device may be an AI node on a network side (an access network or a core network), a computing node, an access network node having an AI capability, a core network element having an AI capability, or the like.

It should be noted that the network device may be the device or the apparatus shown above, or may be a component (for example, a chip), a module, or a unit in the device or the apparatus shown above. This is not specifically limited in this application.

In the face of continuously growing data, higher-level communication needs to be considered, that is, effective communication between a transmit end and a receive end instead of precise data replication needs to be implemented. Semantic communication is a new communication mode, and an objective of semantic communication is to correctly interpret, by the receive end, semantic information sent by the transmit end, instead of precisely reconstructing sent data. Usually, the transmit end and the receive end need to have a common semantic knowledge base. A transmit end apparatus performs semantic data extraction on raw data, and sends extracted semantic data to a receive end apparatus, instead of sending the raw data. This significantly reduces a bandwidth requirement. For example, a deep learning technology represented by a deep neural network (deep neural network, DNN) has been widely used to extract semantic data of various types of data. For example, objects are extracted from pictures for classification, detection, and description by using text, and a natural language is understood and translated. The deep neural network has a large quantity of learnable parameters, and can effectively extract semantic data from noisy signals.

In semantic communication, semantic data sent by the transmit end apparatus does not need to be precisely reconstructed, and only corresponding semantic data needs to be restored at the receive end apparatus. Therefore, semantic communication is fault-tolerant. In particular, the deep neural network has strong robustness for signal noise, and can effectively extract necessary semantic data when there is an error in received semantic data.

In a conventional data transmission mechanism, data from an application layer of the transmit end apparatus is first processed by using protocols at various layers, and then sent after operations such as coding and modulation are performed at a physical layer. In a radio access network, an RLC layer and the physical layer are involved in data retransmission. Specifically, data from the RLC layer is sent through the physical layer, and the transmit end apparatus adds a CRC bit to a data packet. The CRC bit is used for data check. The receive end apparatus first decodes received data, and then performs CRC check on the data. If the check succeeds, the data is transmitted upward to the RLC layer. If the check fails, a NACK is fed back to the transmit end apparatus. If the RLC layer of the receive end apparatus does not receive, within a specified time, data transmitted upward from the physical layer, it is considered that transmission of the data fails. The receive end apparatus may feed back a NACK to the transmit end apparatus, to trigger the transmit end apparatus to resend the data.

Therefore, it may be learned that CRC check and data retransmission are intended to ensure that the receive end apparatus perfectly reconstructs data sent by the transmit end apparatus. For semantic communication, the receive end apparatus only needs to correctly interpret semantic information sent by the transmit end apparatus. The semantic information does not necessarily require perfect data reconstruction. Therefore, in the conventional data transmission mechanism, fault tolerance of semantic communication cannot be fully used as data retransmission is performed when CRC check fails, resulting in unnecessary data retransmission.

This application provides a corresponding technical solution, to reduce unnecessary data retransmission and improve semantic communication efficiency. For details, refer to related descriptions in the following embodiments.

The following describes technical terms in this application.

Neural network: The neural network may include a neuron. The neuron may be an operation unit, and an input to the operation unit is $x_s$, that is, $x_s$ is input data of the operation unit. An output of the operation unit may be as follows:

$$h_{W,b}(x) = f\left(W^T x\right) = f\left(\sum_{s=1}^{n} W_s x_s + b\right)$$

Herein, s=1, 2, ..., and n, n is a natural number greater than 1, $W^T$ is a weight matrix, and $W_s$ is a weight of $x_s$. It should be noted that optionally, the weight of $x_s$ may be calculated by adding a weight gradient to a weight previously used by the neuron. Herein, b is a bias of the neuron, and f is an activation function (activation function) of the neuron, and is used to introduce a non-linear characteristic into the neural network, to convert an input signal in the neuron into an output signal. That is, if a parameter is input to a neuron, the neuron may output a corresponding parameter. The neural network is a network formed by connecting many single neurons together. That is, an output of a neuron may be an input to another neuron. A type of the neural network may include a convolutional neural network (convolutional neural network, CNN), a transformer neural network, a recurrent neural network (recurrent neural network, RNN), or the like.

The neural network may have a plurality of layers of neurons, and the neural network includes one or more neural network layers. With reference to FIG. 2, the following describes a plurality of neural network layers included in a neural network. The neural network shown in FIG. 2 includes five neural network layers, which are specifically a neural network layer (neural network, NN 1) to an NN 5. The NN 1 includes two inputs, a connection structure between the NN 1 and the NN 2, and three outputs of the NN 1. The three outputs of the NN 1 are three inputs to the NN 2. The NN 2 includes three inputs, a connection structure between the NN 2 and the NN 3, and four outputs of the NN 2. The four outputs of the NN 2 are four inputs to the NN 3. The NN 3, the NN 4, and the NN 5 are similar. Details are not described herein.

A semantic layer is data of one or more semantic layers that is output by a model. The model has one or more semantic layers. In a possible implementation, the data of the semantic layer may be understood as data of a neural network layer. As shown in FIG. 2, data of a semantic layer 1 may be input data of an NN 1 in a neural network; data of a semantic layer 2 may be input data of an NN 2 in the neural network; data of a semantic layer 3 may be input data of an NN 3 in the neural network; data of a semantic layer 4 may be input data of an NN 4 in the neural network; and data of a semantic layer 5 may be input data of an NN 5 in the neural network. For the semantic layer 2, the semantic layer 2 is a higher semantic layer compared with the semantic layer 1. For the semantic layer 1, the semantic layer 1 is a lower semantic layer compared with the semantic layer 2. In another possible implementation, the data of the semantic layer may be understood as an entity and a relationship at a corresponding layer in a knowledge graph. For example, "species" is a layer, and "animals" is a layer lower than "species". An entity and a relationship at one layer in the knowledge graph may be understood as data of one semantic layer.

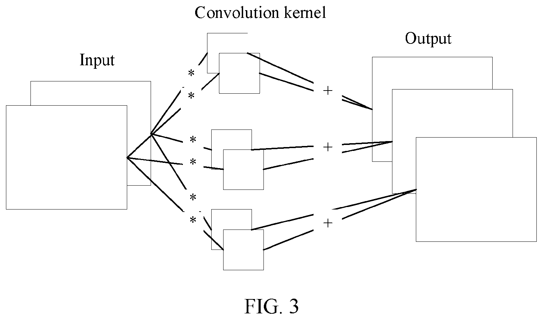

A convolutional neural network is a forward neural network structure based on a convolution operation. As shown in FIG. 3, at a convolutional layer, a convolution operation is separately performed on input multi-channel signals by using a convolution kernel, to obtain output signals of a plurality of channels. A dimension of the convolution kernel is a quantity of input channels multiplied by a size of the convolution kernel multiplied by a quantity of output channels. A typical convolution operation at one layer may be expressed as follows:

$$h_j = f(w_{ij} * x_i + b_j)$$

Herein, $w_{ij}$ is a weight matrix from an input channel i to an output channel j, $x_i$ is data input to the input channel i, $b_j$ is a bias vector, and f is an activation function.

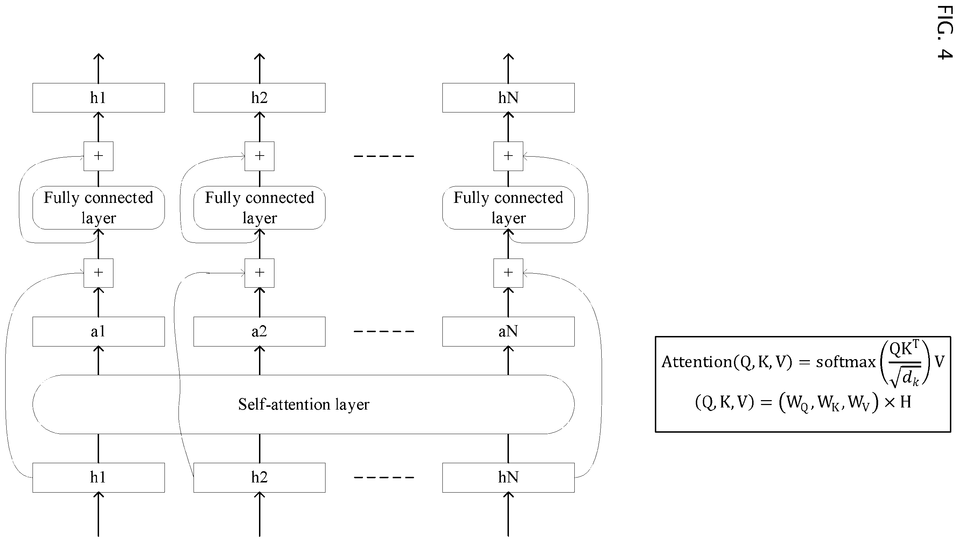

A transformer neural network is a type of neural network with a self-attention structure. One layer is shown in FIG. 4. An input of the neural network includes a plurality of to-be-processed vectors $h_{1 \times d}^{(i)}$, where i = 1, 2, ..., N, and the vectors interact with each other through a self-attention layer. Herein, $1 \times d$ indicates that the vector $h_{1 \times d}^{(i)}$ is a vector of two dimensions, where one dimension is 1, and the other dimension is d. An operation at the self-attention layer is shown in a formula in FIG. 4, and each of $Q_{N \times d}$, $K_{N \times d}$, and $V_{N \times d}$ is a new matrix obtained by performing linear transformation on a matrix $H_{N \times d}$ including an input vector. An output of the self-attention layer is a vector $a_{1 \times d}^{(i)}$, where i = 1, 2, ..., N having a same quantity as H. Subsequently, processing is separately performed at a fully connected layer to obtain an input to a next layer. In any vector in $Q_{N \times d}$, $K_{N \times d}$, and $V_{N \times d}$, $N \times d$ indicates that the vector is a vector of two dimensions, where one dimension is N, and the other dimension is d. As shown in FIG. 4, h1 to hN may be understood as N tokens in a transformer, and each token has corresponding output data.

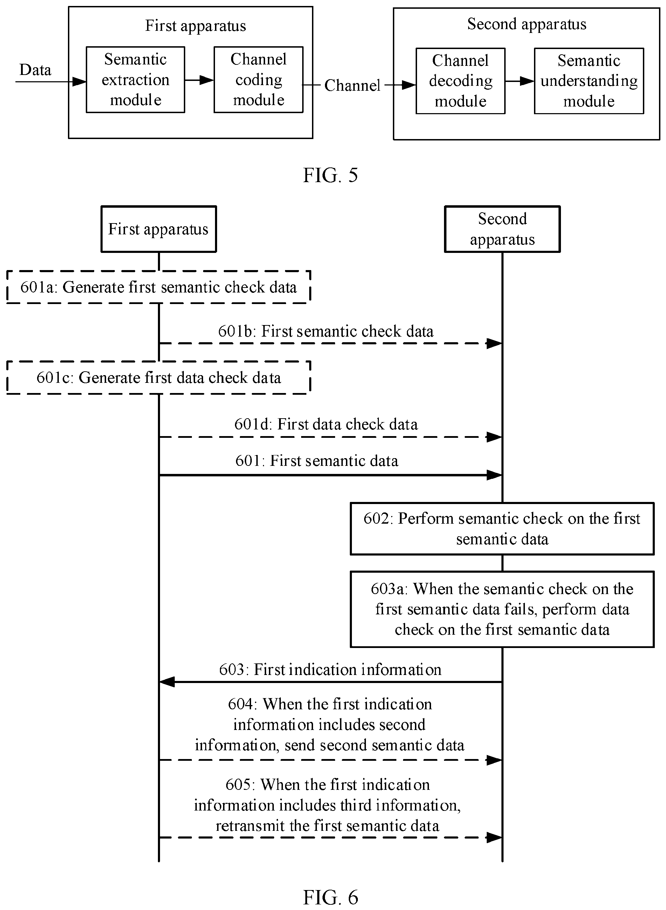

Semantic communication: FIG. 5 shows a semantic communication system according to this application. As shown in FIG. 5, the semantic communication system includes a first apparatus, a second apparatus, and a channel for communication between the first apparatus and the second apparatus. The first apparatus includes a semantic extraction module and a channel coding module. The second apparatus includes a channel decoding module (or referred to as a channel decoding module) and a semantic understanding module. It should be noted that an algorithm in the semantic extraction module (or the semantic understanding module) includes but is not limited to one or more of the neural networks described above.

In the semantic communication system shown in FIG. 5, the first apparatus extracts semantic data from data through the semantic extraction module (or referred to as a semantic extraction model) in the first apparatus. Then, the first apparatus performs channel coding on the semantic data through the channel coding module, and then sends the semantic data to the second apparatus. The second apparatus performs, through the channel decoding module, channel decoding on a signal sent by the first apparatus, to obtain the semantic data. The second apparatus processes the semantic data through the semantic understanding module (or referred to as a semantic understanding model) in the second apparatus, to obtain target data.

Therefore, it may be learned that semantic communication is that the first apparatus extracts semantic data from raw data (or referred to as to-be-sent raw data), removes redundant data from the raw data, and sends the semantic data to the second apparatus. Further, after receiving the semantic data, the second apparatus understands the semantic data, to obtain data that the first apparatus wants to transmit. It may be learned that according to such a communication method, a data transmission amount can be reduced, and communication resources can be saved.

The following describes the technical solutions in this application with reference to specific embodiments.

FIG. 6 is a diagram of an embodiment of a semantic communication method according to an embodiment of this application. It should be noted that in FIG. 6, the method is shown by using an example in which a first apparatus and a second apparatus serve as execution bodies of the interaction diagram. For the first apparatus and the second apparatus, refer to the foregoing related descriptions. With reference to FIG. 6, the method includes the following steps.

601: The first apparatus sends first semantic data to the second apparatus. Correspondingly, the second apparatus receives the first semantic data from the first apparatus.

The first semantic data is determined from first data.

The following describes some possible implementations of the first data. This application is also applicable to another implementation. This is not specifically limited in this application.

Implementation 1: The first data includes raw data. For example, a type of the raw data may be one or more of an image, text, a video, or a voice. This is not limited in this application. In this implementation, optionally, the first apparatus includes a semantic extraction module, and the first apparatus extracts the first semantic data from the raw data through the semantic extraction module.

Implementation 2: The first data includes semantic data extracted from raw data. For the raw data, refer to the foregoing related descriptions. Optionally, the first semantic data is some semantic data in the semantic data extracted from the raw data.

Implementation 3: The first data includes semantic data that is extracted from raw data and that is obtained through semantic filtering.

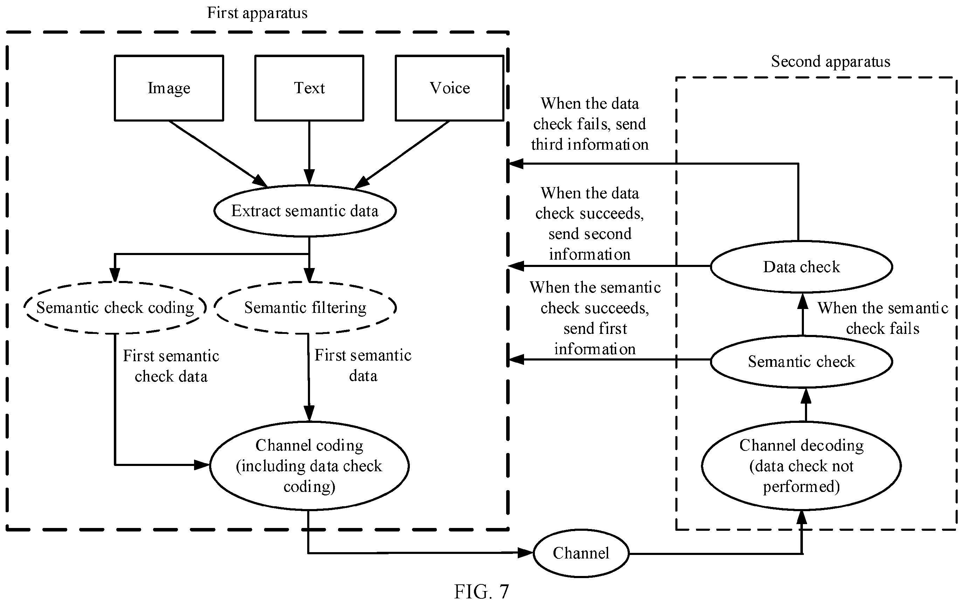

For the raw data, refer to the foregoing related descriptions. Optionally, the first apparatus includes a semantic extraction module and a semantic filtering module. The first apparatus extracts a plurality of pieces of semantic data from the raw data through the semantic extraction module, and selects the first semantic data from the plurality of pieces of semantic data through the semantic filtering module. For example, as shown in FIG. 7, the first apparatus extracts a plurality of pieces of semantic data from the raw data such as an image, text, and a voice, and obtains the first semantic data through semantic filtering.

Implementation 4: The first data includes semantic data obtained from another apparatus.

The first semantic data includes some or all of semantic data in the first data. For example, the following shows an application scenario of this application. A plurality of apparatuses jointly complete a task. Optionally, the task may be a picture recovery task or a picture classification task. A whole model used to implement the task is split into a plurality of models. A corresponding model is deployed in each of the plurality of apparatuses, and different models are deployed in different apparatuses. The first apparatus belongs to the plurality of apparatuses. The first apparatus obtains the first data from one of the plurality of apparatuses. The one of the apparatuses may be a previous apparatus that executes the task before the first apparatus. For example, three apparatuses jointly complete a task, and the three apparatuses include an apparatus 1, an apparatus 2, and an apparatus 3. The first apparatus is the apparatus 2. A model 1 is deployed in the apparatus 1, a model 2 is deployed in the apparatus 2, and a model 3 is deployed in the apparatus 3. The apparatus 1 uses raw data as input data of the model 1, to obtain first data output by the model 1, and sends the first data to the apparatus 2.

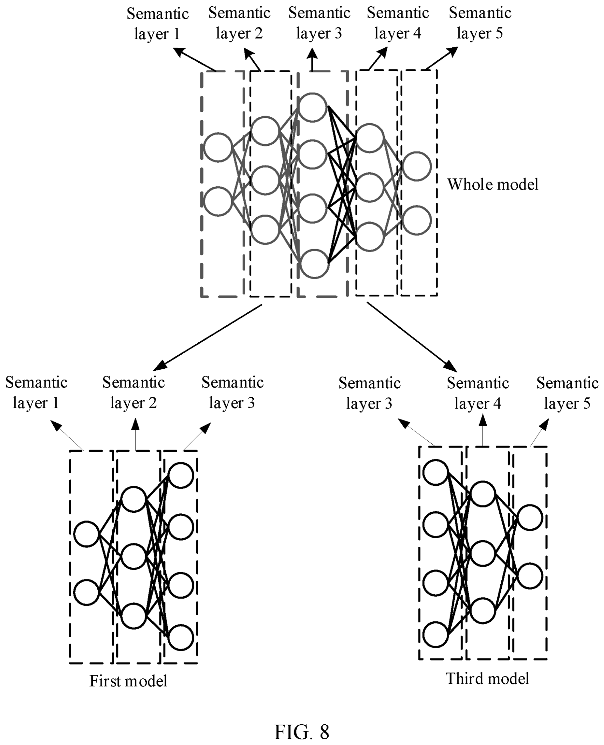

The following uses an example in which the first apparatus and the second apparatus jointly complete execution of a task for description. As shown in FIG. 8, for a task, the task may be executed by using the whole model. Specifically, the first apparatus and the second apparatus may jointly execute the task. Therefore, the whole model may be divided into a first model and a third model. The first model is deployed in the first apparatus, and the third model is deployed in the second apparatus. The first apparatus may use the raw data as input data of the first model. Correspondingly, the first model outputs data corresponding to each of a semantic layer 1 to a semantic layer 3. The first semantic data may include some or all of the data of the semantic layer 3.

It should be noted that FIG. 8 is merely a possible application scenario. In actual application, the first model may be obtained by the first apparatus through training by using corresponding data. The third model may be obtained by the second apparatus through training by using corresponding data, and is not necessarily obtained by splitting the whole model. This is not specifically limited in this application.

Optionally, the first semantic data is some semantic data in semantic data determined from the first data. Each piece of semantic data has corresponding importance. The first semantic data may be semantic data of high importance. Optionally, the first apparatus inputs the first data to the first model, and the data of the semantic layer that is output by the first model includes importance of each piece of semantic data.

The following describes two possible implementations of the first semantic data. This application is also applicable to another implementation. This is not specifically limited in this application.

Implementation 1: The first semantic data includes data of one or more first semantic layers. The data of the one or more first semantic layers is data of the one or more first semantic layers that is output by the first model when the first data is used as input data of the first model. For example, as shown in FIG. 8, the first model includes a semantic layer 1 to a semantic layer 3. The first apparatus uses the first data as input data of the first model, to obtain data that corresponds to each of the semantic layer 1 to the semantic layer 3 and that is output by the first model. The first semantic data may include the data of the semantic layer 3.

Implementation 2: The first semantic data includes data obtained by performing a preset operation on data of one or more first semantic layers. For example, the first apparatus compresses the data of the one or more first semantic layers, to obtain compressed data of the one or more first semantic layers. For another example, the data of the one or more first semantic layers is represented by using a vector, and the first apparatus maps the vector to a natural language.

Optionally, the embodiment shown in FIG. 6 further includes step 601a and step 601b.

601a: The first apparatus generates first semantic check data.

The first semantic check data is used to perform semantic check on the first semantic data.

As shown in FIG. 7, the first apparatus may include a semantic check coding module. The semantic check coding module may add the first semantic check data to the semantic data extracted by the semantic extraction module. The semantic data extracted by the semantic extraction module includes the first semantic data. It should be understood that FIG. 7 is merely an example. In actual application, the first apparatus may perform, through the semantic filtering module, semantic filtering on the semantic data extracted by the semantic extraction module, to obtain the first semantic data. Then, the first apparatus adds the first semantic check data to the first semantic data through the semantic check coding module.

The following describes some possible implementations of the first semantic check data. This application is also applicable to another implementation. This is not specifically limited in this application.

Implementation 1: The first semantic check data includes data of one or more second semantic layers.

The one or more second semantic layers are semantic layers higher than the one or more first semantic layers. The data of the one or more second semantic layers is data of the one or more second semantic layers that is output by the whole model when the first data is used as input data of the whole model. The first model is one of the plurality of models obtained by splitting the whole model. Alternatively, the first model is obtained by the first apparatus through training by using corresponding data. For example, as shown in FIG. 8, the first semantic data includes data of a semantic layer 3 that is output by the first model. The first model may be deployed in the first apparatus, and the first model is used by the first apparatus to generate the first semantic data. Alternatively, the whole model may be deployed in the first apparatus. The first apparatus uses the first data as input data of the whole model, to obtain data of a semantic layer 1 to a semantic layer 5 that is output by the whole model. The first semantic check data may include data of a semantic layer 4 that is output by the whole model. The semantic layer 4 is a semantic layer higher than the semantic layer 3.

Implementation 2: The first semantic check data includes label information of data of one or more second semantic layers.

In the implementation 2, optionally, the first apparatus uses the first data as input data of a fourth model, to obtain the label information of the data of the one or more second semantic layers that is output by the fourth model. The fourth model is used to generate label information of data of the semantic layer, and the fourth model is obtained through training by using historical data and historical label information. For example, the label information may include a hash code corresponding to the data of the one or more second semantic layers.

Implementation 3: The first semantic check data includes data of one or more third semantic layers.

The data of the one or more third semantic layers is data of the one or more third semantic layers that is output by a second model when the first data is used as input data of the second model. The second model is another model different from the first model.

601b: The first apparatus sends the first semantic check data to the second apparatus. Correspondingly, the second apparatus receives the first semantic check data from the first apparatus.

It should be noted that there is no fixed execution sequence between step 601b and step 601. For example, step 601 may be performed first, and then step 601b may be performed; step 601b may be performed first, and then step 601 may be performed; or step 601 and step 601b are simultaneously performed. This is not specifically limited in this application. Step 601a is performed before step 601b.

Optionally, the embodiment shown in FIG. 6 further includes step 601c and step 601d.

601c: The first apparatus generates first data check data.

The first data check data is used to perform data check on the first semantic data.

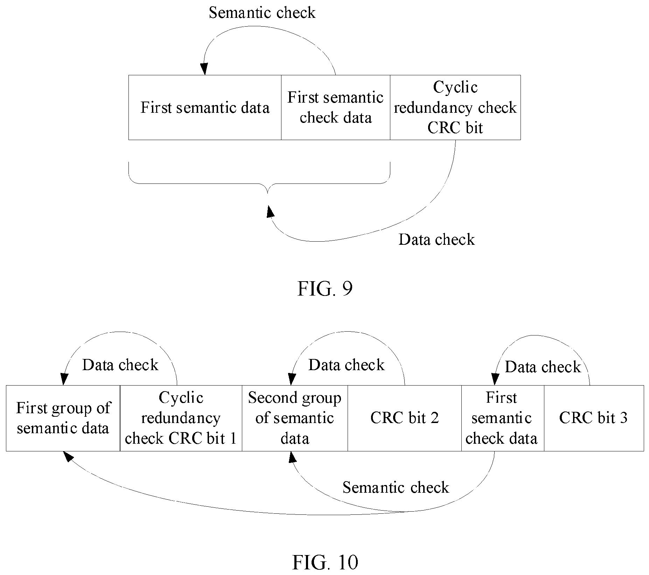

In a possible implementation, the first apparatus adds the first data check data to the first semantic data and the first semantic check data. Therefore, it is convenient to perform data check on the first semantic data and the first semantic check data by using the first data check data. For example, as shown in FIG. 9, the first data check data includes a cyclic redundancy check (cyclic redundancy check, CRC) bit. The first apparatus adds the CRC bit to the first semantic data and the first semantic check data.

In another possible implementation, the first semantic data includes a plurality of groups of semantic data, and the first data check data includes a plurality of groups of data check data. The plurality of groups of semantic data and the plurality of groups of data check data are in a one-to-one correspondence, and each of the plurality of groups of data check data is used to perform data check on one group of semantic data corresponding to the group of data check data. In an implementation, the first semantic data is divided into a plurality of groups of semantic data. The first apparatus separately adds corresponding data check data to each group of semantic data. For example, as shown in FIG. 10, the first semantic data includes a first group of semantic data and a second group of semantic data. The first apparatus adds a CRC bit 1 to the first group of semantic data, adds a CRC bit 2 to the second group of semantic data, and adds a CRC bit 3 to the first semantic check data. In this way, data check data is separately added to each group of semantic data. It is convenient to subsequently retransmit only semantic data whose data check fails, to further reduce a data retransmission amount.

The following describes two possible grouping manners of the first semantic data. This application is also applicable to another grouping manner. This is not specifically limited in this application.

Manner 1: The first semantic data includes a plurality of groups of semantic data. Each of the plurality of groups of semantic data includes data of one output channel in a convolutional neural network, and different groups of semantic data correspond to data of different output channels.

For example, the first model is deployed in the first apparatus, and the first model is a convolutional neural network. For the convolutional neural network, refer to the related descriptions in FIG. 3. The first apparatus inputs the first data to the convolutional neural network, to obtain data of a plurality of output channels in the convolutional neural network. Data of each data channel may be grouped into one group of semantic data. Data of different data channels may be grouped into different groups of semantic data.

Manner 2: The first semantic data includes a plurality of groups of semantic data. Each of the plurality of groups of semantic data includes output data corresponding to one token in a transformer, and different groups of semantic data correspond to output data corresponding to different tokens.

For example, the first model is deployed in the first apparatus, and the first model is a transformer neural network. For the transformer neural network, refer to the related descriptions in FIG. 4. The first apparatus uses the first data as input data corresponding to N tokens, to obtain output data corresponding to the N tokens. Output data corresponding to each token may be grouped into one group of semantic data. Output data corresponding to different tokens may be grouped into different groups of semantic data.

601d: The first apparatus sends the first data check data to the second apparatus. Correspondingly, the second apparatus receives the first data check data from the first apparatus.

It should be noted that there is no fixed execution sequence between step 601d and step 601. For example, step 601 may be performed first, and then step 601d may be performed; step 601d may be performed first, and then step 601 may be performed; or step 601 and step 601d are simultaneously performed. This is not specifically limited in this application. Step 601c is performed before step 601d.

It should be noted that when the embodiment shown in FIG. 6 includes step 601 and step 601a to step 601d, there is no fixed execution sequence among step 601, step 601b, and step 601d. This is not specifically limited in this application. For example, step 601 is performed first, then step 601b is performed, and finally step 601d is performed; step 601 is performed first, then step 601d is performed, and finally step 601b is performed; step 601b is performed first, then step 601d is performed, and finally step 601 is performed; step 601b is performed first, then step 601 is performed, and finally step 601d is performed; step 601d is performed first, then step 601b is performed, and finally step 601 is performed; step 601d is performed first, then step 601 is performed, and finally step 601b is performed; or step 601, step 601b, and step 601d are simultaneously performed. This is not specifically limited in this application.

602: The second apparatus performs semantic check on the first semantic data received by the second apparatus.

It should be noted that due to channel transmission, the first semantic data sent by the first apparatus may be different from the first semantic data received by the second apparatus, the first semantic check data sent by the first apparatus may be different from the first semantic check data received by the second apparatus, and the first data check data sent by the first apparatus may be different from the first data check data received by the second apparatus. Therefore, the first semantic data received by the second apparatus may also be referred to as third semantic data. The first semantic data in the following embodiment shown in FIG. 6 may be understood as the first semantic data received by the second apparatus. The first semantic check data received by the second apparatus may also be referred to as third semantic check data. The first semantic check data in the following embodiment shown in FIG. 6 may be understood as the first semantic check data received by the second apparatus. The first data check data received by the second apparatus may also be referred to as second data check data. The first data check data in the following embodiment shown in FIG. 6 may be understood as the first data check data received by the second apparatus.

In a possible implementation, the first semantic data includes data of one or more first semantic layers.

In another possible implementation, the first semantic data includes data obtained by performing a preset operation on data of one or more first semantic layers. For example, the first apparatus compresses the data of the one or more first semantic layers, to obtain compressed data of the one or more first semantic layers. Therefore, the second apparatus decompresses the received first semantic data, to obtain the data of the one or more first semantic layers. For another example, the data of the one or more first semantic layers is represented by using a vector, and the first apparatus maps the vector to a natural language. The second apparatus maps the received first semantic data to a vector.

The following describes two possible implementations of step 602. This application is also applicable to another implementation. This is not specifically limited in this application.

Implementation 1: Based on step 601b, step 602 specifically includes: The second apparatus generates second semantic check data based on the first semantic data; the second apparatus determines whether the first semantic check data is consistent with the second semantic check data; and if the first semantic check data is consistent with the second semantic check data, the second apparatus determines that the semantic check on the first semantic data succeeds; or if the first semantic check data is inconsistent with the second semantic check data, the second apparatus determines that the semantic check on the first semantic data fails.

For example, as shown in FIG. 8, the first semantic check data includes data of a semantic layer 4 that is output by the whole model. The first semantic data includes data of a semantic layer 3 that is output by the first model. The second apparatus uses the data of the semantic layer 3 as an input to the third model, to obtain data of the semantic layer 4 that is output by the third model. The data of the semantic layer 4 that is output by the third model is the second semantic check data. The second apparatus determines whether the data of the semantic layer 4 that is output by the whole model is consistent with the data of the semantic layer 4 that is output by the third model. If the data of the semantic layer 4 that is output by the whole model is consistent with the data of the semantic layer 4 that is output by the third model, the second apparatus determines that the semantic check on the first semantic data succeeds. If the data of the semantic layer 4 that is output by the whole model is inconsistent with the data of the semantic layer 4 that is output by the third model, the second apparatus determines that the semantic check on the first semantic data fails.

For example, as shown in FIG. 8, the first semantic check data includes label information of data of a semantic layer 4 that is output by the whole model. The first semantic data includes data of a semantic layer 3 that is output by the first model. The second apparatus uses the data of the semantic layer 3 as an input to the third model, to obtain data of the semantic layer 4 that is output by the third model. The second apparatus generates label information of the data of the semantic layer 4 that is output by the third model. The second apparatus determines whether the label information of the data of the semantic layer 4 that is output by the whole model is consistent with the label information of the data of the semantic layer 4 that is output by the third model. If the label information of the data of the semantic layer 4 that is output by the whole model is consistent with the label information of the data of the semantic layer 4 that is output by the third model, the second apparatus determines that the semantic check on the first semantic data succeeds. If the label information of the data of the semantic layer 4 that is output by the whole model is inconsistent with the label information of the data of the semantic layer 4 that is output by the third model, the second apparatus determines that the semantic check on the first semantic data fails.

For example, the first semantic check data is represented by using a first vector, and the second semantic check data is represented by using a second vector. The second apparatus determines a difference between elements of a same dimension in the first vector and the second vector, to obtain one or more differences. The second apparatus determines an average value of the one or more differences. If the average value is less than or equal to a first threshold, it indicates that the semantic check on the first semantic data succeeds. If the average value is greater than a first threshold, it indicates that the semantic check on the first semantic data fails. Optionally, the first threshold is determined based on a task type of a task. The task may be jointly executed by the first apparatus and the second apparatus. For example, for a task, the first apparatus and the second apparatus jointly complete the task. The type of the task is an industrial control task, and sensitivity of the industrial control task is high. Therefore, the first threshold may be set to a small value.

For example, the first semantic check data is represented by using a first vector, and the second semantic check data is represented by using a second vector. If a cosine similarity between the first vector and the second vector is greater than a second threshold, it indicates that the semantic check on the first semantic data succeeds. If a cosine similarity between the first vector and the second vector is less than or equal to a second threshold, it indicates that the semantic check on the first semantic data fails. Optionally, the second threshold is determined based on a task type of a task. For example, for a task, the first apparatus and the second apparatus jointly complete the task. The type of the task is an industrial control task, and sensitivity of the industrial control task is high. Therefore, the second threshold may be set to a large value.

Implementation 2: Step 602 specifically includes: The second apparatus determines a correctness probability of the first semantic data; and if the correctness probability is greater than a preset threshold, the second apparatus determines that the semantic check on the first semantic data succeeds; or if the correctness probability is less than or equal to a preset threshold, the second apparatus determines that the semantic check on the first semantic data fails. Alternatively, step 602 specifically includes: The second apparatus determines a correctness probability of the first semantic data; and if the correctness probability is greater than or equal to a preset threshold, the second apparatus determines that the semantic check on the first semantic data succeeds; or if the correctness probability is less than a preset threshold, the second apparatus determines that the semantic check on the first semantic data fails.

In a possible implementation, the second apparatus uses the first semantic data and the first semantic check data as input data of a fifth model, to obtain a correctness probability of the first semantic data that is output by the fifth model. Optionally, the fifth model is obtained through training by using historical semantic data and historical semantic check data. If the correctness probability is greater than the preset threshold, the second apparatus determines that the semantic check on the first semantic data succeeds. If the correctness probability is less than or equal to the preset threshold, the second apparatus determines that the semantic check on the first semantic data fails.

In another possible implementation, the second apparatus uses the first semantic data as input data of the third model, to obtain a correctness probability of the first semantic data that is output by the third model. As shown in FIG. 8, the first semantic data includes data of a semantic layer 3 that is output by the first model. The second apparatus inputs the first semantic data to a semantic layer 4 as the input data of the third model, to obtain data of a semantic layer 5 that is output by the third model. The data of the semantic layer 5 includes the correctness probability of the first semantic data.

Optionally, the preset threshold is 0.6, 0.7, 0.8, or 0.9.

Optionally, the preset threshold is determined based on a task type of a task. The task may be jointly executed by the first apparatus and the second apparatus. For example, for a task, the first apparatus and the second apparatus jointly complete the task. The type of the task is an industrial control task, and sensitivity of the industrial control task is high. Therefore, the preset threshold may be set to a large value. For example, the preset threshold is 0.9.

603: The second apparatus sends first indication information to the first apparatus. Correspondingly, the first apparatus receives the first indication information from the second apparatus.

In a possible implementation, when the semantic check on the first semantic data succeeds, the first indication information includes first information. The first information indicates the first apparatus not to retransmit the first semantic data. For example, as shown in FIG. 8, after the second apparatus receives the first semantic data, the second apparatus performs semantic check on the first semantic data. When the semantic check on the first semantic data succeeds, the second apparatus sends the first information to the first apparatus, to indicate the first apparatus not to retransmit the first semantic data. In this way, data retransmission is avoided, and semantic communication efficiency is improved. The second apparatus may use the first semantic data as input data of the third model, to obtain data output by the third model. In this way, the task is executed.

Optionally, the first information further indicates the first apparatus not to retransmit semantic data other than the first semantic data in the semantic data determined from the first data. That is, when the semantic check on the first semantic data succeeds, the first apparatus does not need to retransmit any semantic data. In this way, unnecessary data retransmission is reduced.

In another possible implementation, when the semantic check on the first semantic data fails, optionally, the embodiment shown in FIG. 6 further includes step 603a. Step 603a may be performed before step 603 and after step 602.

603a: When the semantic check on the first semantic data fails, the second apparatus performs data check on the first semantic data.

Optionally, based on step 601d, that the second apparatus performs data check on the first semantic data specifically includes: The second apparatus performs data check on the first semantic data by using the first data check data.

For example, as shown in FIG. 9, the first data check data includes a CRC bit, and the CRC bit is used to perform data check on the first semantic data and the first semantic check data. The second apparatus performs CRC check on the first semantic data and the first semantic check data by using the CRC bit.

Optionally, the first data check data includes a plurality of groups of data check data. The first semantic data includes a plurality of groups of semantic data. The plurality of groups of data check data and the plurality of groups of semantic data are in a one-to-one correspondence. The second apparatus performs data check on each group of semantic data by using one group of data check data corresponding to the group of semantic data. As shown in FIG. 10, the first semantic data includes a first group of semantic data and a second group of semantic data. The second apparatus performs data check on the first group of semantic data by using a CRC bit 1, performs data check on the second group of semantic data by using a CRC bit 2, and performs data check on the first semantic check data by using a CRC bit 3.

In a possible implementation, when the data check on the first semantic data succeeds, the first indication information includes second information. The second information indicates to request semantic data other than the first semantic data in the semantic data determined from the first data. For example, as shown in FIG. 7, after the second apparatus receives the first semantic data, the second apparatus performs semantic check on the first semantic data. When the semantic check on the first semantic data fails, the second apparatus performs data check on the first semantic data. When the data check on the first semantic data succeeds, the second apparatus sends the second information to the first apparatus. Therefore, the first apparatus is indicated to send new semantic data, so that the second apparatus executes a corresponding task.

In another possible implementation, when the data check on the first semantic data fails, the first indication information includes third information. The third information indicates to retransmit the first semantic data. For example, as shown in FIG. 8, after the second apparatus receives the first semantic data, the second apparatus performs semantic check on the first semantic data. When the semantic check on the first semantic data fails, the second apparatus performs data check on the first semantic data. When the data check on the first semantic data fails, the second apparatus sends the third information to the first apparatus. Therefore, the first apparatus is indicated to retransmit the first semantic data.

Optionally, the first semantic data includes a plurality of groups of semantic data. When data check on a first part of the plurality of groups of semantic data succeeds, and data check on a second part of the plurality of groups of semantic data fails, the third information indicates to retransmit the second part of the groups of semantic data. Therefore, only semantic data whose data check fails needs to be retransmitted, to reduce a data retransmission amount.

For example, as shown in Table 1, various values of the first indication information and meanings indicated by the various values are shown.

Table 1

| Semantic check status and data check status | The semantic check succeeds, and the data check succeeds; or the semantic check succeeds, and the data check fails | The semantic check fails, and the data check succeeds | The semantic check fails, and the data check fails |
|---|---|---|---|
| Value of the first indication information | 1 | 01 | 00 |
| Retransmission status | No need for retransmission | Retransmit semantic data other than the first semantic data in the semantic data determined from the first data | Retransmit the first semantic data |

As shown in Table 1, when the semantic check on the first semantic data succeeds, and the data check on the first semantic data succeeds, or when the semantic check on the first semantic data succeeds, and the data check on the first semantic data fails, the first indication information includes 1 bit. As shown in Table 1, a value of the first indication information may be 1, and the first indication information indicates that the semantic check on the first semantic data succeeds, and the data check on the first semantic data succeeds, or the first indication information indicates that the semantic check on the first semantic data succeeds, and the data check on the first semantic data fails. When the semantic check on the first semantic data fails, and the data check on the first semantic data succeeds, the first indication information includes 2 bits. As shown in Table 1, a value of the first indication information may be 01, and the first indication information indicates that the semantic check on the first semantic data fails, and the data check on the first semantic data succeeds. When the semantic check on the first semantic data fails, and the data check on the first semantic data fails, the first indication information includes 2 bits. As shown in Table 1, a value of the first indication information may be 00, and the first indication information indicates that the semantic check on the first semantic data fails, and the data check on the first semantic data fails. It may be learned from Table 1 that the second apparatus feeds back the first indication information with reference to a semantic check result and a data check result, thereby reducing signaling overheads.

In a possible implementation, the second information further includes a semantic check result obtained by performing semantic check on the first semantic data. Therefore, the first apparatus is indicated to select a corresponding quantity of pieces of semantic data for retransmission. Optionally, the first apparatus is a network device, and the second apparatus is a terminal device. The terminal device feeds back the second information to the network device.

The following describes two possible implementations of the semantic check result. This application is also applicable to another implementation. This is not specifically limited in this application.

Implementation 1: The semantic check result includes the correctness probability of the first semantic data. For a manner of obtaining the correctness probability of the first semantic data, refer to the foregoing related descriptions. Details are not described herein.

Implementation 2: The semantic check result includes a similarity value between the first semantic check data and the second semantic check data. The first semantic check result is semantic check data received by the second apparatus from the first apparatus. The second semantic check data is generated based on the first semantic data. For a specific generation manner, refer to the foregoing related descriptions.

For example, the first semantic check data is represented by using a first vector, and the second semantic check data is represented by using a second vector. An average value of a plurality of differences calculated by using the first vector and the second vector is the similarity value. The plurality of differences are differences between elements of a same dimension in the first vector and the second vector. Alternatively, a cosine similarity between the first vector and the second vector is the similarity value.

For example, the first semantic check data is represented by using a bit sequence 1, and the second semantic check data is represented by using a bit sequence 2. The similarity value is calculated by performing a corresponding operation on the bit sequence 1 and the bit sequence 2. For example, the second apparatus calculates a Hamming distance between the bit sequence 1 and the bit sequence 2, to obtain the similarity value.

Optionally, the second information includes at least 3 bits. In the at least 3 bits, 2 bits indicate that the semantic check on the first semantic data fails. A bit other than the 2 bits in the at least 3 bits indicates a level of the semantic check result obtained through the semantic check. The level of the semantic check result represents the correctness probability of the first semantic data.

For example, first 2 bits in the at least 3 bits indicate that the semantic check on the first semantic data fails, and a bit other than the first 2 bits in the at least 3 bits indicates the level of the semantic check result obtained through the semantic check.

Table 2

| Semantic check status and data check status | The semantic check succeeds, and the data check succeeds; or the semantic check succeeds, and the data check fails | The semantic check fails, and the data check succeeds | The semantic check fails, and the data check fails |
|---|---|---|---|
| Value of the first indication information | 1 | 01XX | 00 |
| Retransmission status | No need for retransmission | Retransmit semantic data other than the first semantic data in the semantic data determined from the first data | Retransmit the first semantic data |

As shown in Table 2, when the semantic check on the first semantic data succeeds, and the data check on the first semantic data succeeds, or when the semantic check on the first semantic data succeeds, and the data check on the first semantic data fails, the first indication information includes 1 bit. As shown in Table 2, a value of the first indication information may be 1, and the first indication information indicates that the semantic check on the first semantic data succeeds, and the data check on the first semantic data succeeds, or the first indication information indicates that the semantic check on the first semantic data succeeds, and the data check on the first semantic data fails. When the semantic check on the first semantic data fails, and the data check on the first semantic data succeeds, the first indication information includes 4 bits. As shown in Table 2, a value of the first indication information is 01XX. For 01XX, refer to the following related descriptions. The first indication information indicates that the semantic check on the first semantic data fails, and the data check on the first semantic data fails. When the semantic check on the first semantic data fails, and the data check on the first semantic data fails, the first indication information includes 2 bits. As shown in Table 1, a value of the first indication information may be 00, and the first indication information indicates that the semantic check on the first semantic data fails, and the data check on the first semantic data fails.

"XX" in "01XX" in Table 2 corresponds to the level of the semantic check result. In this application, the first apparatus may classify the level of the semantic check result based on a quantity of pieces of semantic data determined from the first data, or the first apparatus classifies the level of the semantic check result based on the correctness probability of the semantic data. The semantic check result may be classified into four levels, and each level is used to transmit a different quantity of pieces of semantic data. The level of the semantic check result indicates confidence or reliability of the semantic check result, indicates a similarity between the first semantic check result and the second semantic check result, or indicates the correctness probability of the first semantic data. For example, if the level of the semantic check result of the first semantic data is a first level, a value of XX is 00. If the level of the semantic check result of the first semantic data is a second level, a value of XX is 01. If the semantic check result of the first semantic data is of a third level, a value of XX is 10. If the semantic check result of the first semantic data is of a fourth level, a value of XX is 11.

In another possible implementation, the second information further includes second indication information. The second indication information indicates to retransmit N pieces of semantic data other than the first semantic data in the semantic data determined from the first data. N is an integer greater than or equal to 1. For example, a decimal representation corresponding to "XX" in "01XX" in Table 2 means a quantity of pieces of to-be-retransmitted semantic data other than the first semantic data in the semantic data determined from the first data. In this implementation, optionally, the first apparatus is a terminal device, and the second apparatus is a network device. The network device indicates the terminal device to retransmit the N pieces of semantic data other than the first semantic data in the semantic data determined from the first data.

Optionally, when the first indication information includes the second information, the embodiment shown in FIG. 6 further includes step 604. Step 604 may be performed after step 603.

604: When the first indication information includes the second information, the first apparatus sends second semantic data to the second apparatus. Correspondingly, the second apparatus receives the second semantic data from the first apparatus.

In a possible implementation, the second semantic data is semantic data, other than the first semantic data, determined from the first data. For example, the first apparatus may select semantic data of high importance from semantic data other than the first semantic data determined from the first data, and send the semantic data to the second apparatus.

In another possible implementation, the second semantic data includes data of a fourth semantic layer. The first semantic data includes the data of the first semantic layer. The data of the first semantic layer and the data of the fourth semantic layer are respectively data of the first semantic layer and data of the fourth semantic layer that are output by the first model when the first data is used as the input data of the first model. The fourth semantic layer is a semantic layer lower than the first semantic layer.

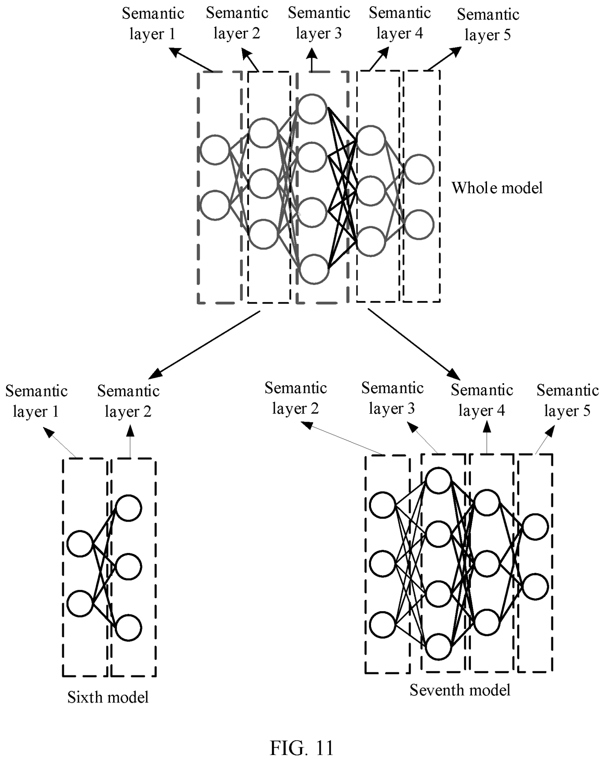

For example, as shown in FIG. 8, the first apparatus inputs the first data to the first model, to obtain semantic data output by the first model. The semantic data output by the first model includes data of a semantic layer 1, data of a semantic layer 2, and data of a semantic layer 3. The first semantic data includes the data of the semantic layer 3. In step 603, the first apparatus may send the data of the semantic layer 2 to the second apparatus. The semantic layer 2 is a semantic layer lower than the semantic layer 3. Therefore, in this implementation, it should be understood that the whole model is split into a sixth model and a seventh model shown in FIG. 11. The sixth model is deployed in the first apparatus, and the seventh model is deployed in the second apparatus. After the second apparatus receives the second semantic data, the second apparatus may input the second semantic data to the semantic layer 2 as input data of the seventh model, to obtain semantic data output by the seventh model. In this way, the task is completed.

Optionally, when the first indication information includes the third information, the embodiment shown in FIG. 6 further includes step 605. Step 605 may be performed after step 603.

605: When the first indication information includes the third information, the first apparatus retransmits the first semantic data to the second apparatus. Correspondingly, the second apparatus receives the retransmitted first semantic data from the first apparatus.

For example, as shown in FIG. 8, after the second apparatus receives the first semantic data retransmitted by the first apparatus, the second apparatus restores, based on the retransmitted first semantic data, the first semantic data sent by the first apparatus in step 601. The second apparatus may use the restored first semantic data as input data of the third model, to obtain semantic data output by the third model.

In this embodiment of this application, after the first apparatus sends the first semantic data, the first apparatus receives the first indication information. The first indication information includes the first information, and the first information indicates not to retransmit the first semantic data. Alternatively, the first indication information includes the second information, and the second information is used to request semantic data other than the first semantic data in the semantic data determined from the first data. Alternatively, the first indication information includes the third information, and the third information indicates to retransmit the first semantic data. Therefore, it may be learned that the first indication information corresponds to three possible indication meanings. For example, when semantic check on the first semantic data succeeds, the first semantic data is not retransmitted. When semantic check on the first semantic data fails, and data check on the first semantic data succeeds, semantic data other than the first semantic data in the semantic data determined from the first data is requested. When semantic check on the first semantic data fails, and data check on the first semantic data fails, the first semantic data is retransmitted. Therefore, it may be learned that when the semantic check on the first semantic data succeeds, the semantic data does not need to be retransmitted. The corresponding semantic data is retransmitted only when the semantic check on the first semantic data fails. In this way, unnecessary data retransmission is reduced, a quantity of retransmissions is reduced, and semantic communication efficiency is improved.

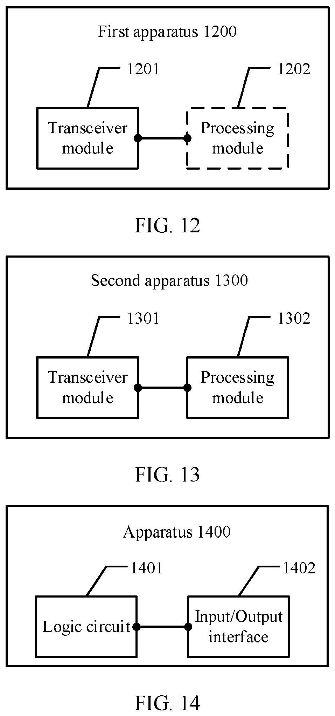

The following describes the first apparatus provided in embodiments of this application. FIG. 12 is a diagram of a structure of a first apparatus according to an embodiment of this application. The first apparatus 1200 may be configured to perform the steps performed by the first apparatus in the embodiment shown in FIG. 6. For details, refer to the related descriptions in the foregoing method embodiment.

The first apparatus 1200 includes a transceiver module 1201. Optionally, the first apparatus 1200 further includes a processing module 1202.

The transceiver module 1201 is configured to: send first semantic data, where the first semantic data is determined from first data; and receive first indication information, where the first indication information includes first information, and the first information indicates not to retransmit the first semantic data; the first indication information includes second information, and the second information is used to request semantic data other than the first semantic data in semantic data determined from the first data; or the first indication information includes third information, and the third information indicates to retransmit the first semantic data.

In a possible implementation, the first data includes raw data; the first data includes semantic data extracted from raw data; the first data includes semantic data that is extracted from raw data and that is obtained through semantic filtering; or the first data includes semantic data obtained from another apparatus.

In another possible implementation, the processing module 1202 is configured to generate first semantic check data, where the first semantic check data is used to perform semantic check on the first semantic data; and the transceiver module 1201 is further configured to send the first semantic check data.

In another possible implementation, the first semantic data includes data of one or more first semantic layers, and the data of the one or more first semantic layers is data of the one or more first semantic layers that is output by a first model when the first data is used as input data of the first model.

In another possible implementation, the first semantic check data includes data of one or more second semantic layers; the first semantic check data includes label information of data of one or more second semantic layers; or the first semantic check data includes data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model.

In another possible implementation, the processing module 1202 is configured to generate first data check data, where the first data check data is used to perform data check on the first semantic data; and the transceiver module 1201 is further configured to send the first data check data.

In another possible implementation, the first semantic data includes a plurality of groups of semantic data, the first data check data includes a plurality of groups of data check data, the plurality of groups of semantic data and the plurality of groups of data check data are in a one-to-one correspondence, and each of the plurality of groups of data check data is used to perform data check on one group of semantic data corresponding to the group of data check data.

In another possible implementation, each of the plurality of groups of semantic data includes data of one output channel in a convolutional neural network, and different groups of semantic data correspond to data of different output channels; or each of the plurality of groups of semantic data includes output data corresponding to one token in a transformer, and different groups of semantic data correspond to output data corresponding to different tokens.

In another possible implementation, the second information further includes a semantic check result obtained by performing semantic check on the first semantic data received by an apparatus that sends the second information.

In another possible implementation, the second information further includes second indication information, the second indication information indicates to retransmit N pieces of semantic data other than the first semantic data in the semantic data determined from the first data, and N is an integer greater than or equal to 1.

In another possible implementation, the semantic check result includes a correctness probability of the first semantic data; or the semantic check result includes a similarity value between the first semantic check data and second semantic check data, the first semantic check data is semantic check data received by the apparatus that sends the second information, and the second semantic check data is generated based on the first semantic data received by the apparatus that sends the second information.

In another possible implementation, the second information includes at least 3 bits, first 2 bits in the at least 3 bits indicate that the semantic check on the first semantic data received by the apparatus that sends the second information fails, a bit other than the first 2 bits in the at least 3 bits indicates a level of the semantic check result obtained through the semantic check, and the level of the semantic check result represents the correctness probability of the first semantic data received by the apparatus that sends the second information.

In another possible implementation, if the first indication information includes the second information, the transceiver module 1201 is further configured to send second semantic data, where the second semantic data is semantic data, other than the first semantic data, determined from the first data; or the second semantic data includes data of a fourth semantic layer, the first semantic data includes the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer.

In another possible implementation, if the first indication information includes the third information, the transceiver module 1201 is further configured to retransmit the first semantic data.

The following describes the second apparatus provided in embodiments of this application. FIG. 13 is a diagram of a structure of a second apparatus according to an embodiment of this application. The second apparatus 1300 may be configured to perform the steps performed by the second apparatus in the embodiment shown in FIG. 6. For details, refer to the related descriptions in the foregoing method embodiment.

The second apparatus 1300 includes a transceiver module 1301 and a processing module 1302.

The transceiver module 1301 is configured to receive first semantic data, where the first semantic data is determined from first data.

The processing module 1302 is configured to perform semantic check on the first semantic data.

The transceiver module 1301 is further configured to send first indication information. When the semantic check on the first semantic data succeeds, the first indication information includes first information, and the first information indicates not to retransmit the first semantic data.

Alternatively, the processing module 1302 is further configured to: when the semantic check on the first semantic data fails, perform data check on the first semantic data, where when the data check on the first semantic data succeeds, the first indication information includes second information, and the second information is used to request semantic data other than the first semantic data in semantic data determined from the first data; or when the semantic check on the first semantic data fails, perform data check on the first semantic data, where when the data check on the first semantic data fails, the first indication information includes third information, and the third information indicates to retransmit the first semantic data.

In a possible implementation, the first data includes raw data; the first data includes semantic data extracted from raw data; the first data includes semantic data that is extracted from raw data and that is obtained through semantic filtering; or the first data includes semantic data obtained from another apparatus.

In another possible implementation, the transceiver module 1301 is further configured to receive first semantic check data; and

the processing module 1302 is specifically configured to: generate second semantic check data based on the first semantic data; determine whether the first semantic check data is consistent with the second semantic check data; and if the first semantic check data is consistent with the second semantic check data, determine that the semantic check on the first semantic data succeeds; or if the first semantic check data is inconsistent with the second semantic check data, determine that the semantic check on the first semantic data fails.

In another possible implementation, the first semantic data includes data of one or more first semantic layers, and the data of the one or more first semantic layers is data of the one or more first semantic layers that is output by a first model when the first data is used as input data of the first model.

In another possible implementation, the first semantic check data includes data of one or more second semantic layers; the first semantic check data includes label information of data of one or more second semantic layers; or the first semantic check data includes data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model.

In another possible implementation, the processing module 1302 is specifically configured to: determine a correctness probability of the first semantic data; and if the correctness probability is greater than a preset threshold, determine that the semantic check on the first semantic data succeeds; or if the correctness probability is less than or equal to a preset threshold, determine that the semantic check on the first semantic data fails.

In another possible implementation, the transceiver module 1301 is further configured to receive first data check data; and the processing module 1302 is further configured to perform data check on the first semantic data based on the first data check data.

In another possible implementation, the second information further includes a semantic check result obtained by performing semantic check on the first semantic data.

In another possible implementation, the second information includes second indication information, the second indication information indicates to send and retransmit N pieces of semantic data other than the first semantic data in the semantic data determined from the first data, and N is an integer greater than or equal to 1.

In another possible implementation, the semantic check result includes the correctness probability of the first semantic data; or the semantic check result includes a similarity value between the first semantic check data and the second semantic check data, the first semantic check data is semantic check data received by the second apparatus, and the second semantic check information is generated based on the first semantic data.

In another possible implementation, the first semantic data includes a plurality of groups of semantic data, the first data check data includes a plurality of groups of data check data, and the plurality of groups of semantic data and the plurality of groups of data check data are in a one-to-one correspondence; and

the processing module 1302 is specifically configured to perform data check on each of the plurality of groups of semantic data by using one group of data check data corresponding to each group of semantic data, where when data check on a first part of the plurality of groups of semantic data succeeds, and data check on a second part of the plurality of groups of semantic data fails, the third information indicates to retransmit the second part of the groups of semantic data.

In another possible implementation, each of the plurality of groups of semantic data includes data of one output channel in a convolutional neural network, and different groups of semantic data correspond to data of different output channels; or each of the plurality of groups of semantic data includes output data corresponding to one token in a transformer, and different groups of semantic data correspond to output data corresponding to different tokens.

In another possible implementation, the second information includes at least 3 bits, first 2 bits in the at least 3 bits indicate that the semantic check on the first semantic data fails, a bit other than the first 2 bits in the at least 3 bits indicates a level of the semantic check result obtained through the semantic check, and the level of the semantic check result represents the correctness probability of the first semantic data.

In another possible implementation, if the first indication information includes the second information, the transceiver module 1301 is further configured to receive second semantic data, where the second semantic data is semantic data, other than the first semantic data, determined from the first data; or the second semantic data includes data of a fourth semantic layer, the first semantic data includes the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer.

In another possible implementation, if the first indication information includes the third information, the transceiver module 1301 is further configured to receive the retransmitted first semantic data.

FIG. 14 is a diagram of a structure of another apparatus according to an embodiment of this application. The apparatus 1400 includes at least an input/output interface 1402. The apparatus 1400 may be a chip or an integrated circuit.

Optionally, the apparatus 1400 further includes a logic circuit 1401.

In a possible implementation, the transceiver module 1201 shown in FIG. 12 may be a communication interface. The communication interface may be the input/output interface 1402 shown in FIG. 14. The input/output interface 1402 may include an input interface and an output interface. Alternatively, the communication interface may be a transceiver circuit, and the transceiver circuit may include an input interface and an output interface. Optionally, the processing module 1202 shown in FIG. 12 may be the logic circuit 1401 shown in FIG. 14.

The logic circuit 1401 and the input/output interface 1402 may perform other steps performed by the first apparatus in any embodiment, and implement corresponding beneficial effects. Details are not described herein.

In another possible implementation, the transceiver module 1301 shown in FIG. 13 may be a communication interface. The communication interface may be the input/output interface 1402 shown in FIG. 14. The input/output interface 1402 may include an input interface and an output interface. Alternatively, the communication interface may be a transceiver circuit, and the transceiver circuit may include an input interface and an output interface. Optionally, the processing module 1302 shown in FIG. 13 may be the logic circuit 1401 shown in FIG. 14.

The logic circuit 1401 and the input/output interface 1402 may perform other steps performed by the second apparatus in any embodiment, and implement corresponding beneficial effects. Details are not described herein.

Optionally, the logic circuit 1401 may be a processing apparatus, and some or all of functions of the processing apparatus may be implemented by using software. Some or all of the functions of the processing apparatus may be implemented by using software.

Optionally, the processing apparatus may include a memory and a processor. The memory is configured to store a computer program. The processor reads and executes the computer program stored in the memory, to perform corresponding processing and/or steps in the foregoing method embodiments.

Optionally, the processing apparatus may include only a processor. A memory configured to store a computer program is located outside the processing apparatus. The processor is connected to the memory through a circuit or a wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field programmable gate arrays (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), another integrated chip, any combination of the foregoing chips or processors, or the like.

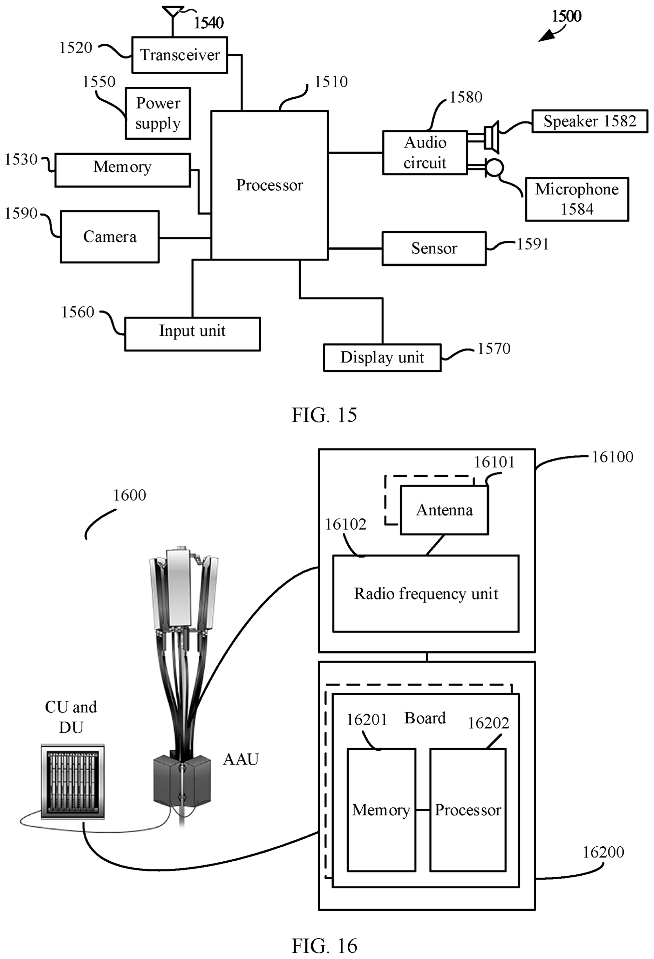

An embodiment of this application further provides a terminal device. FIG. 15 is a diagram of a structure of a terminal device according to an embodiment of this application. The terminal device 1500 may be used in the system shown in FIG. 1A or FIG. 1B. For example, the terminal device 1500 may be the terminal device in the system shown in FIG. 1A or FIG. 1B, and is configured to perform a function of the first apparatus or the second apparatus in the foregoing method embodiments.

As shown in FIG. 15, the terminal device 1500 includes a processor 1510 and a transceiver 1520. Optionally, the terminal device 1500 further includes a memory 1530. The processor 1510, the transceiver 1520, and the memory 1530 may communicate with each other through an internal connection path, to transmit a control signal and/or transmit a data signal. The memory 1530 is configured to store a computer program. The processor 1510 is configured to: invoke the computer program from the memory 1530 and run the computer program, to control the transceiver 1520 to receive/send a signal. Optionally, the terminal device 1500 may further include an antenna 1540, configured to send, by using a radio signal, uplink data or uplink control signaling output by the transceiver 1520.

The processor 1510 and the memory 1530 may be integrated into a processing apparatus. The processor 1510 is configured to execute program code stored in the memory 1530, to implement the foregoing functions. In specific implementation, the memory 1530 may alternatively be integrated into the processor 1510, or may be independent of the processor 1510. In a possible implementation, the processor 1510 may correspond to the processing module 1202 shown in FIG. 12, and the transceiver 1520 may correspond to the transceiver module 1201 shown in FIG. 12. In another possible implementation, the processor 1510 may correspond to the processing module 1303 shown in FIG. 13, and the transceiver 1520 may correspond to the transceiver module 1301 shown in FIG. 13.

The transceiver 1520 may also be referred to as a transceiver unit. The transceiver 1520 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 1500 shown in FIG. 15 can implement processes related to the first apparatus or the second apparatus in the embodiment shown in FIG. 6. Operations and/or functions of the modules in the terminal device 1500 are separately intended to implement corresponding procedures in the foregoing apparatus embodiments. For details, refer to the descriptions in the foregoing apparatus embodiments. To avoid repetition, detailed descriptions are appropriately omitted herein.

The processor 1510 may be configured to perform an action implemented inside the first apparatus or the second apparatus described in the foregoing apparatus embodiments, and the transceiver 1520 may be configured to perform a receiving/sending action of the first apparatus or the second apparatus described in the foregoing apparatus embodiments. For details, refer to the descriptions in the foregoing apparatus embodiments. Details are not described herein.

Optionally, the terminal device 1500 may further include a power supply 1550, configured to supply power to various components or circuits in the terminal device.

In addition, to improve functions of the terminal device, the terminal device 1500 may further include one or more of an input unit 1560, a display unit 1570, an audio circuit 1580, a camera 1590, a sensor 1591, and the like. The audio circuit 1580 may further include a speaker 1582, a microphone 1584, and the like.

This application further provides a network device. FIG. 16 is a diagram of a structure of a network device according to an embodiment of this application. The network device 1600 may be used in the system shown in FIG. 1A, FIG. 1B, or FIG. 1C. For example, the network device 1600 may be the access network device in the system shown in FIG. 1A, FIG. 1B, or FIG. 1C, to perform a function of the first apparatus or the second apparatus in the foregoing method embodiments. It should be understood that the following is merely an example. In a future communication system, the network device may have another form and composition.

For example, in a 5G communication system, the network device 1600 may include a CU, a DU, and an AAU, which is different from a network device that is in an LTE communication system and that includes one or more radio frequency units, for example, a remote radio unit (remote radio unit, RRU) and one or more baseband units (baseband units, BBUs).

A non-real-time part of the original BBU is obtained through splitting and redefined as the CU, which is responsible for processing non-real-time protocols and services. Some physical layer processing functions of the BBU are combined with the original RRU and a passive antenna into the AAU. Remaining functions of the BBU are redefined as the DU, which is responsible for processing physical layer protocols and real-time services. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 16, is consistent with that of a conventional 4G network device. The CU and the DU are deployed on same hardware. It should be understood that FIG. 16 is merely an example, and does not limit the protection scope of this application. For example, the deployment form may alternatively be that the DU is deployed in a BBU equipment room, the CU is deployed in a centralized manner or the DU is deployed in a centralized manner, the CU is centralized at a higher level, or the like.

The AAU 16100 may implement a receiving/sending function, is referred to as a transceiver unit 16100, and corresponds to the transceiver module 1201 shown in FIG. 12. Alternatively, the AAU 16100 may implement a receiving/sending function, is referred to as a transceiver unit 16100, and corresponds to the transceiver module 1301 shown in FIG. 13.

Optionally, the transceiver unit 16100 may also be referred to as a transceiver machine, a transceiver circuit, a transceiver, or the like, and may include at least one antenna 16101 and a radio frequency unit 16102. Optionally, the transceiver unit 16100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit).

The CU and the DU 16200 may implement an internal processing function, is referred to as a processing unit 16200, and corresponds to the processing module 1202 shown in FIG. 12. Alternatively, the CU and the DU 16200 may implement an internal processing function, is referred to as a processing unit 16200, and corresponds to the processing module 1302 shown in FIG. 13.

Optionally, the processing unit 16200 may control the network device or the like, and may be referred to as a controller. The AAU, the CU, and the DU may be physically disposed together, or may be physically disposed separately.

In addition, the network device is not limited to the form shown in FIG. 16, and may alternatively be in another form, for example, includes a BBU and an adaptive radio unit (adaptive radio unit, ARU), or includes a BBU and an AAU; or may be customer premises equipment (customer premises equipment, CPE), or may be in another form. This is not limited in this application.

In an example, the processing unit 16200 may include one or more boards. A plurality of boards may jointly support a radio access network (for example, an LTE network) of a single access standard, or may separately support radio access networks (for example, an LTE network, a 5G network, a future network, or another network) of different access standards. The CU and the DU 16200 further include a memory 16201 and a processor 16202. The memory 16201 is configured to store necessary instructions and data. The processor 16202 is configured to control the network device to perform a necessary action, for example, configured to control the network device to perform an operation procedure related to the first apparatus or the second apparatus in the foregoing method embodiments. The memory 16201 and the processor 16202 may serve the one or more boards. In other words, a memory and a processor may be disposed on each board. Alternatively, a plurality of boards may share a same memory and processor. In addition, a necessary circuit may be further disposed on each board.

It should be understood that the network device 1600 shown in FIG. 16 can implement a function of the first apparatus or the second apparatus in the method embodiment in FIG. 6. Operations and/or functions of the units in the network device 1600 are separately intended to implement corresponding procedures performed by the network device in the method embodiments of this application. To avoid repetition, detailed descriptions are appropriately omitted herein. The structure of the network device shown as an example in FIG. 16 is merely a possible form, and should not constitute any limitation on embodiments of this application. In this application, a possibility that there may be a network device structure in another form in the future is not excluded.

The CU and the DU 16200 may be configured to perform an action implemented inside the first apparatus or the second apparatus described in the foregoing method embodiments, and the AAU 16100 may be configured to perform a receiving/sending action of the first apparatus or the second apparatus described in the foregoing method embodiments. For details, refer to the descriptions in the foregoing method embodiments. Details are not described herein.

This application further provides a computer program product. The computer program product includes computer program code. When the computer program code is run on a computer, the computer is enabled to perform the method in the embodiment shown in FIG. 6.

This application further provides a computer-readable medium. The computer-readable medium stores program code. When the program code is run on a computer, the computer is enabled to perform the method in the embodiment shown in FIG. 6.

This application further provides a communication system. The communication system includes a first apparatus and a second apparatus. The first apparatus is configured to perform some or all of the steps performed by the first apparatus in the embodiment shown in FIG. 6, and the second apparatus is configured to perform some or all of the steps performed by the second apparatus in the embodiment shown in FIG. 6.

An embodiment of this application further provides a chip apparatus, including a processor, configured to invoke a computer program or computer instructions stored in a memory, to enable the processor to perform the method in the embodiment shown in FIG. 6.

In a possible implementation, an input to the chip apparatus corresponds to a receiving operation in the embodiment shown in FIG. 6, and an output of the chip apparatus corresponds to a sending operation in the embodiment shown in FIG. 6.

Optionally, the processor is coupled to the memory through an interface.

Optionally, the chip apparatus further includes the memory, and the memory stores the computer program or the computer instructions.

The processor described above at any location may be a general-purpose central processing unit, a microprocessor, an application-specific integrated circuit (application-specific integrated circuit, ASIC), or one or more integrated circuits configured to control program execution of the method in the embodiment shown in FIG. 6. The memory described above at any location may be a read-only memory (read-only memory, ROM), another type of static storage device that can store static information and instructions, a random access memory (random access memory, RAM), or the like.

It may be clearly understood by persons skilled in the art that for convenient and brief description, for explanations and beneficial effects of related content in any communication apparatus provided above, refer to the corresponding method embodiment provided above. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

In conclusion, the foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in embodiments of this application.

**Claims**

1. A semantic communication method, wherein the method comprises:

   sending first semantic data, wherein the first semantic data is determined from first data; and
   receiving first indication information, wherein
   the first indication information comprises first information, and the first information indicates not to retransmit the first semantic data;
   the first indication information comprises second information, and the second information is used to request semantic data other than the first semantic data in semantic data determined from the first data; or
   the first indication information comprises third information, and the third information indicates to retransmit the first semantic data.

2. The method according to claim 1, wherein the first data comprises raw data;

   the first data comprises semantic data extracted from the raw data;
   the first data comprises semantic data that is extracted from the raw data and that is obtained through semantic filtering; or
   the first data comprises semantic data obtained from another apparatus.

3. The method according to claim 1 or 2, wherein the method further comprises:

   generating first semantic check data, wherein the first semantic check data is used to perform semantic check on the first semantic data; and
sending the first semantic check data.

4. The method according to claim 3, wherein the first semantic data comprises data of one or more first semantic layers, and the data of the one or more first semantic layers is data of the one or more first semantic layers that is output by a first model when the first data is used as input data of the first model.

5. The method according to claim 4, wherein the first semantic check data comprises data of one or more second semantic layers; the first semantic check data comprises label information of data of one or more second semantic layers; or the first semantic check data comprises data of one or more third semantic layers; and the one or more second semantic layers are semantic layers higher than the one or more first semantic layers, and the data of the one or more third semantic layers is data of the one or more third semantic layers that is output by a second model when the first data is used as input data of the second model.

6. The method according to any one of claims 1 to 5, wherein the method further comprises:

generating first data check data, wherein the first data check data is used to perform data check on the first semantic data; and
sending the first data check data.

7. The method according to claim 6, wherein the first semantic data comprises a plurality of groups of semantic data, the first data check data comprises a plurality of groups of data check data, the plurality of groups of semantic data and the plurality of groups of data check data are in a one-to-one correspondence, and each of the plurality of groups of data check data is used to perform data check on one group of semantic data corresponding to the group of data check data.

8. The method according to claim 7, wherein each of the plurality of groups of semantic data comprises data of one output channel in a convolutional neural network, and different groups of semantic data correspond to data of different output channels; or each of the plurality of groups of semantic data comprises output data corresponding to one token in a transformer, and different groups of semantic data correspond to output data corresponding to different tokens.

9. The method according to any one of claims 1 to 8, wherein the second information further comprises a semantic check result obtained by performing semantic check on the first semantic data received by an apparatus that sends the second information; or the second information further comprises second indication information, the second indication information indicates to retransmit N pieces of semantic data other than the first semantic data in the semantic data determined from the first data, and N is an integer greater than or equal to 1.

10. The method according to claim 9, wherein the semantic check result comprises a correctness probability of the first semantic data received by the apparatus that sends the second information; or the semantic check result comprises a similarity value between the first semantic check data and the second semantic check data, the first semantic check data is semantic check data received by the apparatus that sends the second information, and the second semantic check data is generated based on the first semantic data received by the apparatus that sends the second information.

11. The method according to any one of claims 1 to 10, wherein the second information comprises at least 3 bits, first 2 bits in the at least 3 bits indicate that the semantic check on the first semantic data received by the apparatus that sends the second information fails, a bit other than the first 2 bits in the at least 3 bits indicates a level of the semantic check result obtained through the semantic check, and the level of the semantic check result represents the correctness probability of the first semantic data received by the apparatus that sends the second information.

12. The method according to any one of claims 1 to 11, wherein if the first indication information comprises the second information, the method further comprises:
sending second semantic data, wherein the second semantic data is semantic data, other than the first semantic data, determined from the first data; or the second semantic data comprises data of a fourth semantic layer, the first semantic data comprises the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer.

13. The method according to any one of claims 1 to 11, wherein if the first indication information comprises the third information, the method further comprises:
    retransmitting the first semantic data.

14. A semantic communication method, wherein the method comprises:

    receiving first semantic data, wherein the first semantic data is determined from first data;
    performing semantic check on the first semantic data; and
    sending first indication information, wherein
    when the semantic check on the first semantic data succeeds, the first indication information comprises first information, and the first information indicates not to retransmit the first semantic data; or
    when the semantic check on the first semantic data fails, performing data check on the first semantic data, wherein when the data check on the first semantic data succeeds, the first indication information comprises second information, and the second information is used to request semantic data other than the first semantic data in semantic data determined from the first data; or
    when the semantic check on the first semantic data fails, performing data check on the first semantic data, wherein when the data check on the first semantic data fails, the first indication information comprises third information, and the third information indicates to retransmit the first semantic data.

15. The method according to claim 14, wherein the first data comprises raw data;

    the first data comprises semantic data extracted from the raw data;
    the first data comprises semantic data that is extracted from the raw data and that is obtained through semantic filtering; or
    the first data comprises semantic data obtained from another apparatus.

16. The method according to claim 14 or 15, wherein the method further comprises:

    receiving first semantic check data; and
    performing semantic check on the first semantic data comprises:

        generating second semantic check data based on the first semantic data;
        determining whether the first semantic check data is consistent with the second semantic check data; and
        if the first semantic check data is consistent with the second semantic check data, determining that the semantic check on the first semantic data succeeds; or
        if the first semantic check data is inconsistent with the second semantic check data, determining that the semantic check on the first semantic data fails.

17. The method according to claim 16, wherein the first semantic data comprises data of one or more first semantic layers, and the data of the one or more first semantic layers is data of the one or more first semantic layers that is output by a first model when the first data is used as input data of the first model.

18. The method according to claim 17, wherein the first semantic check data comprises data of one or more second semantic layers; the first semantic check data comprises label information of data of the one or more second semantic layers; or the first semantic check data comprises data of one or more third semantic layers; and
    the one or more second semantic layers are semantic layers higher than the one or more first semantic layers, and the data of the one or more third semantic layers is data of the one or more third semantic layers that is output by a second model when the first data is used as input data of the second model.

19. The method according to claim 14 or 15, wherein performing semantic check on the first semantic data comprises:

    determining a correctness probability of the first semantic data; and
    if the correctness probability is greater than a preset threshold, determining that the semantic check on the first semantic data succeeds; or
    if the correctness probability is less than or equal to a preset threshold, determining that the semantic check on the first semantic data fails.

20. The method according to any one of claims 14 to 19, wherein the method further comprises:

   receiving first data check data; and
   performing data check on the first semantic data comprises:
   performing data check on the first semantic data based on the first data check data.

21. The method according to claim 20, wherein the first semantic data comprises a plurality of groups of semantic data, the first data check data comprises a plurality of groups of data check data, and the plurality of groups of semantic data and the plurality of groups of data check data are in a one-to-one correspondence; and
   performing data check on the first semantic data based on the first data check data comprises:

   performing data check on each of the plurality of groups of semantic data by using one group of data check data corresponding to each group of semantic data, wherein
   when data check on a first part of the plurality of groups of semantic data succeeds, and data check on a second part of the plurality of groups of semantic data fails, the third information indicates to retransmit the second part of the groups of semantic data.

22. The method according to claim 21, wherein each of the plurality of groups of semantic data comprises data of one output channel in a convolutional neural network, and different groups of semantic data correspond to data of different output channels; or
   each of the plurality of groups of semantic data comprises output data corresponding to one token in a transformer, and different groups of semantic data correspond to output data corresponding to different tokens.

23. The method according to any one of claims 14 to 22, wherein the second information further comprises a semantic check result obtained by performing semantic check on the first semantic data; or
   the second information comprises second indication information, the second indication information indicates to send and retransmit N pieces of semantic data other than the first semantic data in the semantic data determined from the first data, and N is an integer greater than or equal to 1.

24. The method according to claim 23, wherein the semantic check result comprises the correctness probability of the first semantic data; or
   the semantic check result comprises a similarity value between the first semantic check data and the second semantic check data, the first semantic check data is semantic check data received by an apparatus that sends the second information, and the second semantic check information is generated based on the first semantic data.

25. The method according to any one of claims 14 to 24, wherein the second information comprises at least 3 bits, first 2 bits in the at least 3 bits indicate that the semantic check on the first semantic data fails, a bit other than the first 2 bits in the at least 3 bits indicates a level of the semantic check result obtained through the semantic check, and the level of the semantic check result represents the correctness probability of the first semantic data.

26. The method according to any one of claims 14 to 25, wherein if the first indication information comprises the second information, the method further comprises:
   receiving second semantic data, wherein the second semantic data is semantic data, other than the first semantic data, determined from the first data; or the second semantic data comprises data of a fourth semantic layer, the first semantic data comprises the data of the first semantic layer, the data of the first semantic layer and the data of the fourth semantic layer are respectively data of the first semantic layer and data of the fourth semantic layer that are output by the first model when the first data is used as the input data of the first model, and the fourth semantic layer is a semantic layer lower than the first semantic layer.

27. The method according to any one of claims 14 to 25, wherein if the first indication information comprises the third information, the method further comprises:
   receiving the retransmitted first semantic data.

28. An apparatus, wherein the apparatus comprises a transceiver module; and the transceiver module is configured to perform a receiving/sending operation according to any one of claims 1 to 13.

29. The apparatus according to claim 28, wherein the first apparatus further comprises a processing module; and the processing module is configured to perform a processing operation according to any one of claims 1 to 13.

30. An apparatus, wherein the apparatus comprises a transceiver module and a processing module; and the transceiver module is configured to perform a receiving/sending operation according to any one of claims 14 to 27, and the processing module is configured to perform a processing operation according to any one of claims 14 to 27.

31. An apparatus, wherein the apparatus comprises a processor; and

the processor is configured to execute a computer program or computer instructions in a memory to perform the method according to any one of claims 1 to 13; or
the processor is configured to execute a computer program or computer instructions in a memory to perform the method according to any one of claims 14 to 27.

32. The apparatus according to claim 31, wherein the apparatus further comprises the memory.

33. A computer-readable storage medium, wherein the computer-readable storage medium stores a computer program, and when the computer program is executed by an apparatus, the apparatus is enabled to perform the method according to any one of claims 1 to 13, or the apparatus is enabled to perform the method according to any one of claims 14 to 27.

34. A computer program product, wherein when the computer program product is run on a computer, the computer is enabled to perform the method according to any one of claims 1 to 13, or the computer is enabled to perform the method according to any one of claims 14 to 27.

FIG. 1A

FIG. 1B

FIG. 1C

FIG. 2

Convolution kernel

Input

Output

\*
\*

\*
\*

+

+

\*

\*

+

FIG. 3

FIG. 4

$$\text{Attention}(Q, K, V) = \text{softmax}\left(\frac{QK^{T}}{\sqrt{d_k}}\right) V$$

$$(Q, K, V) = (W_Q, W_k, W_V) \times H$$

hN   Fully connected layer   aN   hN

h2   Fully connected layer   a2   h2   Self-attention layer

h1   Fully connected layer   a1   h1

First apparatus

| Data → | Semantic extraction module | → | Channel coding module | — Channel — | → | Channel decoding module | → | Semantic understanding module |

Second apparatus

FIG. 5

First apparatus

Second apparatus

601a: Generate first semantic check data

601b: First semantic check data

601c: Generate first data check data

601d: First data check data

601: First semantic data

602: Perform semantic check on the first semantic data

603a: When the semantic check on the first semantic data fails, perform data check on the first semantic data

603: First indication information

604: When the first indication information includes second information, send second semantic data

605: When the first indication information includes third information, retransmit the first semantic data

FIG. 6

Second apparatus

Data check

When the semantic check fails

Semantic check

Channel decoding (data check not performed)

When the data check fails, send third information

When the data check succeeds, send second information

When the semantic check succeeds, send first information

Channel

First apparatus

Voice

Text

Image

Extract semantic data

Semantic filtering

First semantic data

Semantic check coding

First semantic check data

Channel coding (including data check coding)

FIG. 7

FIG. 8

Semantic check

| First semantic data | First semantic check data | Cyclic redundancy check CRC bit |
|---|---|---|

Data check

FIG. 9

Data check  Data check  Data check

| First group of semantic data | Cyclic redundancy check CRC bit 1 | Second group of semantic data | CRC bit 2 | First semantic check data | CRC bit 3 |
|---|---|---|---|---|---|

Semantic check

FIG. 10

FIG. 11

First apparatus 1200

1201    1202

Transceiver module — Processing module

**FIG. 12**

Second apparatus 1300

1301    1302

Transceiver module — Processing module

**FIG. 13**

Apparatus 1400

1401    1402

Logic circuit — Input/Output interface

**FIG. 14**

1540

1520 Transceiver

1550 Power supply

1510

1530 Memory

Processor

1590 Camera

1500

1580 Audio circuit

Speaker 1582

Microphone 1584

Sensor 1591

1560 Input unit

Display unit 1570

FIG. 15

16100

16101

1600

Antenna

16102

Radio frequency unit

CU and DU

AAU

16201 Board 16202

Memory — Processor

16200

FIG. 16

## INTERNATIONAL SEARCH REPORT

| International application No. |
| --- |
| **PCT/CN2023/100957** |

### A. CLASSIFICATION OF SUBJECT MATTER

H04L1/16(2023.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 语义, 校验, 检验, 检错, 重传, 重新, 重发, 失败, 错误, 有误, 指示, 提示, 响应, 反馈, 返回, 正确, 成功, 准确, semantic, CRC, check, retransmission, ACK, NACK, error, failure, indication, response, feedback, correct, success, accurate

### C. DOCUMENTS CONSIDERED TO BE RELEVANT

| Category* | Citation of document, with indication, where appropriate, of the relevant passages | Relevant to claim No. |
| --- | --- | --- |
| Y | WO 2023095932 A1 (LG ELECTRONICS INC.) 01 June 2023 (2023-06-01) claims 1-15, and description, paragraphs [134]-[219] | 1-34 |
| Y | CN 114979267 A (XIAMEN UNIVERSITY) 30 August 2022 (2022-08-30) description, paragraphs [0048]-[0119] | 1-34 |
| Y | CN 115099922 A (JIANGXI UNIVERSITY OF TECHNOLOGY) 23 September 2022 (2022-09-23) description, paragraphs [0037]-[0038] | 1-34 |
| A | CN 113379040 A (SOUTHEAST UNIVERSITY) 10 September 2021 (2021-09-10) entire document | 1-34 |
| A | CN 115549865 A (HUAWEI TECHNOLOGIES CO., LTD.) 30 December 2022 (2022-12-30) entire document | 1-34 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 February 2024** | **08 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | **PCT/CN2023/100957** |

| Patent document cited in search report | | | Publication date (day/month/year) | Patent family member(s) | Publication date (day/month/year) |
|---|---|---|---|---|---|
| WO | 2023095932 | A1 | 01 June 2023 | None | |
| CN | 114979267 | A | 30 August 2022 | None | |
| CN | 115099922 | A | 23 September 2022 | None | |
| CN | 113379040 | A | 10 September 2021 | None | |
| CN | 115549865 | A | 30 December 2022 | None | |

Form PCT/ISA/210 (patent family annex) (July 2022)